# EUROPEAN PATENT APPLICATION

(11) **EP 4 848 075 A1**
(43) Date of publication of application: **02.12.2026**
(21) Application number: 24939144.2
(22) Date of filing: 22.05.2024
(51) Int. Cl.: G06F 8/60

(54) **VEHICLE, CONTROL METHODS AND APPARATUSES THEREFOR AND SERVER**

(71) Applicant: SZ Zhuoyu Technology Co., Ltd., Shenzhen, Guangdong 518055 (CN)
(72) Inventor: CHEN, Xiaozhi, Shenzhen, Guangdong 518055 (CN); XU, Binwhu, Shenzhen, Guangdong 518055 (CN); WEI, Chris, Shenzhen, Guangdong 518055 (CN)
(74) Representative: Botti & Ferrari S.p.A.
(86) International application number: PCT/CN2024/094650
(87) International publication number: WO 2025/241104

(57) **Abstract**

The present disclosure provides a vehicle, a vehicle control method and apparatus, as well as a server. The method comprises: acquiring first environmental data, including environmental data collected by a target vehicle during the operation of an initial autonomous driving model; training a copy of the initial autonomous driving model based on the first environmental data to obtain a target autonomous driving model; deploying the target autonomous driving model to the target vehicle; upon completion of the deployment, the ungranted autonomous driving authority associated with the target autonomous driving model being automatically granted to the target vehicle authority.

## Description

### Technical Field

The present disclosure relates to the field of artificial intelligence, specifically to vehicles, vehicle control methods and apparatus, and servers.

### Background

To achieve autonomous driving, an autonomous driving model must be deployed on a target vehicle. In related technologies, one or more stages of the autonomous driving model deployment process rely heavily on manual intervention and involve a large volume of data to be processed, resulting in low deployment efficiency. Improving the execution efficiency of these stages is an issue that needs to be addressed.

### Summary of the Invention

In a first aspect, embodiments of the present disclosure provide a vehicle control method comprising: acquiring first environmental data, including environmental data collected by a target vehicle during the operation of an initial autonomous driving model; training a copy of the initial autonomous driving model based on the first environmental data to obtain a target autonomous driving model; deploying the target autonomous driving model to the target vehicle; upon completion of the deployment, ungranted autonomous driving authority associated with the target autonomous driving model being automatically granted to the target vehicle.

In a second aspect, an embodiment of the present disclosure provides a vehicle control method which is applied to a target vehicle, the method comprising: selecting target environmental data from environmental data collected by sensors on the target vehicle based on driving data generated during the driving of the target vehicle; uploading the selected target environmental data to a server, so that the server trains a copy of the initial autonomous driving model deployed on the target vehicle based on the target environmental data to obtain a target autonomous driving model; and receiving the target autonomous driving model sent by the server, and generating driving control information based on the target autonomous driving model.

In a third aspect, an embodiment of the present disclosure provides a vehicle control method which is applied to a server, the method comprising: receiving target environmental data uploaded by a target vehicle, including data selected by the target vehicle from environmental data collected by sensors of the target vehicle based on driving data generated during the driving; tagging traffic elements in the target environmental data based on a pre-trained recognition model to obtain tagged information; displaying the target environmental data and the tagged information on a manual annotation interface, and adjusting the tagged information based on operations performed by an annotation operator on the manual annotation interface; training an initial autonomous driving model of the target vehicle based on the target environmental data and the adjusted tagged information to obtain a target autonomous driving model; and deploying the target autonomous driving model to the target vehicle, so that the target vehicle generates driving control information based on the target autonomous driving model.

In a fourth aspect, an embodiment of the present disclosure provides a vehicle control apparatus comprising a processor configured to perform the following steps: acquiring first environmental data, including environmental data collected by a target vehicle during the operation of an initial autonomous driving model; training a copy of the initial autonomous driving model based on the first environmental data to obtain a target autonomous driving model; deploying the target autonomous driving model to the target vehicle; and upon completion of the deployment, ungranted autonomous driving authority associated with the target autonomous driving model being automatically granted to the target vehicle.

In a fifth aspect, an embodiment of the present disclosure provides a vehicle control apparatus which is applied to a target vehicle, the apparatus comprising a processor configured to perform the following steps: selecting target environmental data from environmental data collected by sensors on the target vehicle based on driving data generated during the driving of the target vehicle; uploading the selected target environmental data to a server, so that the server trains a copy of the initial autonomous driving model deployed on the target vehicle based on the target environmental data to obtain a target autonomous driving model; and receiving the target autonomous driving model sent by the server, and generating driving control information based on the target autonomous driving model.

In a sixth aspect, an embodiment of the present disclosure provides a vehicle control apparatus which is applied to a server, the apparatus comprising a processor configured to perform the following steps: receiving target environmental data uploaded by a target vehicle, including data selected by the target vehicle from environmental data collected by sensors on the target vehicle based on driving data generated during the driving; tagging traffic elements in the target environmental data based on a pre-trained recognition model to obtain tagged information; displaying the target environmental data and the tagged information on a manual annotation interface, and adjusting the tagged information based on operations performed by a annotation operator on the manual annotation interface; training an initial autonomous driving model of the target vehicle based on the target environmental data and the adjusted tagged information to obtain a target autonomous driving model; and deploying the target autonomous driving model to the target vehicle, so that the target vehicle generates driving control information based on the target autonomous driving model.

In a seventh aspect, an embodiment of the present disclosure provides a computer-readable storage medium storing computer instructions which, when executed by a processor, implement a method of any of embodiments of the present disclosure.

In a eighth aspect, an embodiment of the present disclosure provides a vehicle comprising: a sensor for collecting environmental data; a processor configured to: select target environmental data from environmental data collected by the sensors on the vehicle based on driving data generated during the driving of the vehicle; upload the selected target environmental data to a server, so that the server trains a copy of an initial autonomous driving model deployed on the vehicle based on the target environmental data to obtain a target autonomous driving model; and receive the target autonomous driving model sent by the server and generate driving control information based on the target autonomous driving model.

In a ninth aspect, an embodiment of the present disclosure provides a server, the server comprising: a communication interface, configured to receive target environmental data uploaded by a target vehicle, including data selected by the target vehicle from environmental data collected by sensors on the target vehicle based on driving data generated during the driving; a self-tagging server, configured to label traffic elements in the target environmental data based on a pre-trained recognition model to obtain tagged information; a manual annotation server, comprising a display device capable of displaying a manual tagging interface, the manual annotation server being configured to display the target environmental data and the tagged information on the manual annotation interface, and to adjust the tagged information based on operations performed by a annotation operator on the manual annotation interface; a training server, configured to train an initial autonomous driving model of the target vehicle based on the target environmental data and the adjusted tagged information to obtain a target autonomous driving model; the communication interface being further configured to deploy the target autonomous driving model to the target vehicle, so that the target vehicle generates driving control information based on the target autonomous driving model.

In the embodiments of the present disclosure, a target vehicle is deployed with an initial autonomous driving model. During the operation of the initial autonomous driving model by the target vehicle, the target vehicle may collect first environmental data. The server trains a copy of the initial autonomous driving model based on the first environmental data to obtain a target autonomous driving model, and deploys the target autonomous driving model to the target vehicle. Since the performance of the initial autonomous driving model is poor, autonomous driving authority granted to the target vehicle are fewer when the initial autonomous driving model is deployed to the target vehicle. If the target autonomous driving model performs well, more autonomous driving authority may be automatically granted to the target vehicle. By adopting the solutions of the embodiments of the present disclosure, autonomous driving authority of the target vehicle may be automatically updated without manually adjusting the autonomous driving authority, thereby reducing human participation during the deployment of the autonomous driving model and improving the deployment efficiency of the autonomous driving model.

Furthermore, the embodiments of the present disclosure automatically selects target environmental data from environmental data collected by sensors of the target vehicle based on driving data generated during the driving of the target vehicle, thereby enabling online data mining and selective uploading of target environmental data. On the one hand, this method of online mining and automatic uploading reduces human participation; on the other hand, it reduces the volume of target environmental data that needs to be processed on the server end and improves the quality of sample data, making the server more efficient in training the target autonomous driving model and resulting in a better performance of the trained target autonomous driving model. The driving control information generated by the target vehicle based on the target autonomous driving model presents higher reliability and accuracy, thereby improving the driving safety of the target vehicle.

Furthermore, in the embodiments of the present invention, upon receiving the target environmental data, the server first automatically labels traffic elements in the target environmental data based on a pre-trained recognition model. It then displays the target environmental data and its tagged information on a manual annotation interface to facilitate further manual adjustments to the automatically tagged information. The above approach uses automatic tagging as primary tagging method and manual annotation as auxiliary tagging method. Since the automatic tagging process by the model is highly efficient, this effectively reduces human participation in the annotation process, thereby improving the efficiency of data tagging. At the same time, because manual annotation has a higher degree of accuracy, the target autonomous driving model trained based on the tagged information manually adjusted and the target environmental data exhibits better performance.

### Description of the Drawings

To more clearly illustrate the technical solutions of the embodiments of the present disclosure, the figures necessary for describing the embodiments will be briefly introduced below. Obviously, these figures are merely some embodiments of the present disclosure. Those skilled in the art may also derive other figures based on these figures without requiring an inventive step.
Figure 1 is a flowchart of a vehicle control method according to an embodiment of the present disclosure;
Figure 2 is a schematic diagram of a manual annotation interface according to an embodiment of the present disclosure;
Figure 3 is a structural schematic diagram of a deployment end and a cloud end according to an embodiment of the present disclosure;
Figure 4 is a general processing flowchart of the deployment end and the cloud end according to an embodiment of the present disclosure;
Figure 5 is a flowchart of a data mining process according to an embodiment of the present disclosure;
Figure 6 is a flowchart of a data tagging process according to an embodiment of the present disclosure;
Figure 7 is a flowchart of semi-automatic data tagging based on pre-labeling according to an embodiment of the present disclosure;
Figure 8 is a flowchart of interactive semi-automatic data tagging according to an embodiment of the present disclosure;
Figure 9 is a flowchart of model development according to an embodiment of the present disclosure;
Figure 10 is a flowchart of a target vehicle control method according to another embodiment of the present disclosure;
Figure 11 is a flowchart of a target vehicle control method according to yet another embodiment of the present disclosure;
Figure 12 is a schematic diagram of a vehicle control apparatus according to an embodiment of the present disclosure;
Figure 13 is a schematic diagram of a vehicle according to an embodiment of the present disclosure; and
Figure 14 is a schematic diagram of a server according to an embodiment of the present disclosure.

### Detailed Description

Exemplary embodiments, illustrated in the accompanying drawings, will be described in detail below. In the following description referring to the drawings, unless otherwise indicated, the same reference numerals in different drawings denote the same or similar elements. The following exemplary embodiments do not represent all possible embodiments consistent with the present disclosure. Rather, they are merely examples of apparatus and methods consistent with certain aspects of the present disclosure as detailed in the appended claims.

The terminology used in this disclosure is intended solely to describe specific embodiments and not to limit the scope of the disclosure. The singular forms "a", "an", and "the" used in the specification and claims are also intended to include the plural forms as well, unless the context clearly indicates otherwise. It should also be understood that the term "and/or" as used herein refers to and includes any or all possible combinations of one or more associated listed items.

It should be understood that although terms such as "first", "second", "third" and so on may be used in this disclosure to describe various types of information, such information is not limited to these terms. These terms are used merely to distinguish pieces of information of the same type from one another. For example, without departing from the scope of the present disclosure, first information may also be referred to as second information, and similarly, second information may also be referred to as first information. Depending on the context, the term "if" used herein may be interpreted as "when", "upon", or "in response to".

To achieve autonomous driving, an autonomous driving model must be deployed on a target vehicle. This process involves multiple stages, including but not limited to some or all of the following: data collection, data uploading, data tagging, model training, and model deployment. At least some of these stages rely heavily on manual execution, resulting in low operational efficiency. For example, in some autonomous driving scenarios, after a data-collecting vehicle collects sample data for training an autonomous driving model, the sample data must be manually uploaded to a data server, and then manually copied to a tagging server, so that the tagging server performs data tagging on the sample data. After tagging is completed, the tagged sample data is manually copied to a training server, so that an autonomous driving model is trained there. The trained copy must then be manually deployed to a test vehicle for testing. After testing is successful, the trained autonomous driving model must be manually uploaded to the target vehicle, and autonomous driving authority for the target vehicle must be manually set. This process is relatively dependent on manual labor, resulting in low operational efficiency.

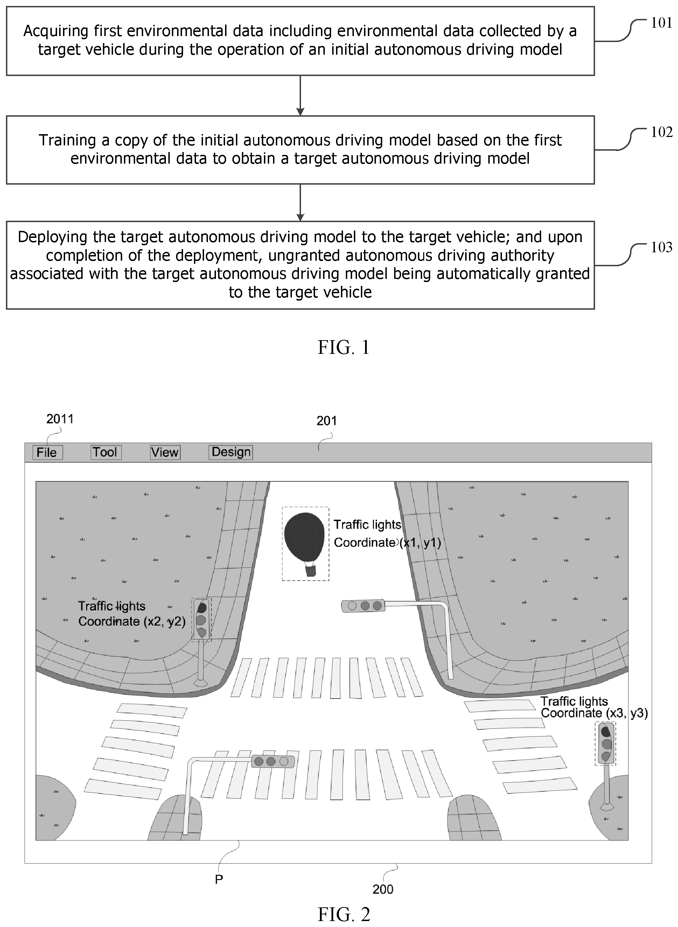

An embodiment of the present disclosure provides a vehicle control method. Referring to Figure 1, the method comprises:
Step 101: acquiring first environmental data, including environmental data collected by a target vehicle during the operation of an initial autonomous driving model;
Step 102: training a copy of the initial autonomous driving model based on the first environmental data to obtain a target autonomous driving model;
Step 103: deploying the target autonomous driving model to the target vehicle; upon completion of the deployment, ungranted autonomous driving authority associated with the target autonomous driving model being automatically granted to the target vehicle.

The method according to the embodiment of the present disclosure may be performed by a server. According to the embodiment of the present disclosure, the target vehicle is deployed with an initial autonomous driving model. During the operation of the initial autonomous driving model of the target vehicle, the target vehicle may collect first environmental data. The server may train a copy of the initial autonomous driving model (also referred to as a copy model) based on the first environmental data to obtain a target autonomous driving model, and deploy the target autonomous driving model to the target vehicle. Because the performance of the initial autonomous driving model is relatively poor, autonomous driving authority granted to the target vehicle are fewer when the initial autonomous driving model is deployed on the target vehicle. When the target autonomous driving model performs well, more autonomous driving authority may be automatically granted to the target vehicle. By adopting the solution of the embodiment of the present disclosure, the autonomous driving authority of the target vehicle may be automatically updated without manually adjusting the autonomous driving authority, thereby reducing human participation during the deployment of the autonomous driving model and improving the deployment efficiency of the autonomous driving model.

In Step 101, the target vehicle is a vehicle equipped with autonomous driving function, which may operate in either autonomous driving mode or manual driving mode. An initial autonomous driving model may be deployed on the target vehicle. The initial autonomous driving model may perceive environmental information surrounding the target vehicle and output driving control information based on perception results. Perception may include, but is not limited to, identifying the categories of objects surrounding the target vehicle, detecting the moving speeds of objects surrounding the target vehicle, and detecting the distances between the target vehicle and surrounding objects. The driving control information may be used to implement at least some of the functions of reminder, early warning, cruise, planning and decision-making. Among them, reminder may include, but are not limited to, reminder to wear seat belt, reminder for fatigue driving, reminder of obstacles in front of the road, and/or yaw reminder; early warning may include, but are not limited to, early warning of traffic accidents in front of the road, early warning of remaining battery or fuel levels of the vehicle, and/or anti-collision early warning, etc.; cruise may include, but is not limited to, adaptive cruise, fixed-speed cruise, etc.; and planning and decision-making may include, but are not limited to, route planning, speed control, etc.

The initial autonomous driving model may be an untrained model or a model that has undergone preliminary training. After the target vehicle is deployed with the initial autonomous driving model, autonomous driving authority matching the initial autonomous driving model may be granted to the target vehicle. "Matching" may refer to the matching between the granted autonomous driving authority and the performance of the initial autonomous driving model. In some embodiments, performance may be determined based on execution accuracy of the initial autonomous driving model when performing at least one task. At least one task may include, but is not limited to, recognition of traffic lights, detection of surrounding vehicles, and detection of lane markings. When the initial autonomous driving model is an untrained model, only reminder and early warning functions may be enabled for the target vehicle. When the initial autonomous driving model is a pre-trained model with preliminary decision-making and planning capabilities, certain decision-making and planning authority, such as route planning authority, may be granted to the target vehicle. Of course, the above are merely illustrative examples, and the methods for granting authority are not limited to those listed. By granting autonomous driving authority matching the initial autonomous driving model, the driving safety of the target vehicle can be ensured.

During the operation of the initial autonomous driving model by the target vehicle, the target vehicle may collect first environmental data. The first environmental data may include, but is not limited to, various forms of data such as image data and audio data. The first environmental data may be collected by sensors on the target vehicle; for example, environmental images of the surroundings of the target vehicle may be collected by visual sensors on the target vehicle, and environmental audio of the surroundings of the target vehicle may be collected by microphones on the target vehicle.

During the collection of the first environmental data, the target vehicle may operate the initial autonomous driving model to process through the initial autonomous driving model the first environmental data in real time and output based on real-time processing results all or part of the driving control information of the target vehicle. For example, after the collection of images of the surroundings of the target vehicle, the initial autonomous driving model may detect distances between various objects in the images and the target vehicle. If an object is detected at a distance from the target vehicle that is less than a preset distance threshold, driving control information controlling the target vehicle to decelerate is output by the initial autonomous driving model.

In addition to being collected by the target vehicle, the first environmental data may also be collected by vehicles other than the target vehicle (e.g., one or more data-collecting vehicles) or by other apparatus deployed around the traffic lane. The method of co-collection of the first environmental data by multiple data-collecting vehicles may be referred to as data crowdsourcing, which effectively improves data collection efficiency.

Optionally, at least two of the multiple data-collecting vehicles may be in different autonomous driving environments, such as environments with different light intensities, different visibility conditions, and/or different road segments. As another example, one of the data-collecting vehicles is in a tunnel scenario, while another is in an intersection scenario. As yet another example, one of the data-collecting vehicles is located in a congested driving scenario, while another is in a smooth driving scenario. This helps to mine more corner case data that is useful for improving the performance of the initial autonomous driving model. The corner case data refers to data that causes the autonomous driving model to fail, performs poorly, or is even previously unseen.

In some embodiments, the first environmental data may include one or more traffic elements. Traffic elements may include those associated with autonomous driving decisions of the target vehicle, or may include those unrelated to such decisions. In some embodiments, traffic elements may include vehicle-specific elements and external traffic environment elements, with the latter comprising static environmental elements, dynamic environmental elements, traffic participant elements, and/or meteorological elements, and the like. The vehicle-specific elements include the vehicle-specific fundamental attributes (e.g., weight, geometric information, performance information, etc.), location information (e.g., coordinate information, current lane information, etc.), motion state information (e.g., lateral and longitudinal motion states), and/or driving task information (e.g., perception and recognition, path planning, human-machine interaction, connected communication, etc.). The static environmental factors refer to stationary objects in the traffic environment, including roads, traffic facilities, surrounding landscapes, and obstacles. The dynamic environmental factors refer to elements in the traffic environment that are in a state of dynamic change, including dynamic indicator facilities (e.g., traffic lights, variable traffic signs, traffic police) and communication environment information (e.g., signal strength information, electromagnetic interference information, signal delay information). The traffic participant elements include information on objects such as pedestrians, animals, and/or other vehicles surrounding the vehicle that influence the decision-making and planning of the vehicle. The meteorological elements include information such as ambient temperature, lighting conditions, and/or weather conditions in the driving scenario. Of course, the first environmental data may also include elements other than traffic elements, such as buildings on both sides of the road or flying objects in the sky. Generally, elements other than traffic elements have a relatively minor impact on the autonomous driving decisions of the target vehicle. Therefore, the first environmental data referred to here primarily refers to environmental data that includes traffic elements, particularly environmental data related to traffic elements associated with the autonomous driving decisions of the target vehicle, for example environmental data regarding movable objects such as pedestrians, vehicles, and animals within a predetermined distance range of the target vehicle.

The first environmental data may be collected at a specific sampling frequency. The sampling frequency may be positively correlated with the moving speed of the target vehicle. For example, when the moving speed of the vehicle exceeds a certain speed threshold, data is collected at a first sampling frequency (e.g., 20 Hz); when the moving speed of the vehicle is less than or equal to a certain speed threshold, data is collected at a second sampling frequency (e.g., 5 Hz). This reduces data redundancy. Of course, the first environmental data may also be collected at a fixed sampling frequency, or collection of the first environmental data may be triggered by preset conditions. The preset conditions may be determined based on a driving status of the target vehicle, for example, collection of the first environmental data is triggered when the target vehicle turns or brakes; they may also be determined based on environmental information, for example, collection of the first environmental data is triggered when the target vehicle is in a dark light environment. In addition to the above conditions, the first environmental data may also be collected based on other conditions, which are not listed here in detail.

The collected first environmental data may be stored; for example, the storage frequency of the first environmental data may be determined based on the moving speed of the target vehicle. For instance, the first environmental data may be stored at a preset storage frequency. The storage frequency is positively correlated with the moving speed of the target vehicle. Specifically, the moving speed of the target vehicle may be divided into several speed ranges, with each speed range corresponding to a specific storage frequency; the wider the speed range, the higher the corresponding storage frequency. Alternatively, functional relationship between the moving speed of the target vehicle and the storage frequency may be determined, and the storage frequency is determined based on the functional relationship and the moving speed of the target vehicle. The storage frequency of the first environmental data may be the same as or different from the collection frequency.

When preset conditions are met, the collected first environmental data may be uploaded to a server. The preset conditions may be set based on at least one of the following types of information:
(1) Volume of the collected first environmental data. For example, the preset condition may be set such that the volume of the collected first environmental data exceeds a preset volume threshold. When the first environmental data consists of images, the preset condition may be that the number of the collected images reaches a preset number (e.g., 500 images), or the capacity occupied by the collected images reaches a preset capacity threshold (e.g., 5 GB); it may also be that the ratio of the number of the collected images to the maximum number of images that may be stored reaches a preset number ratio threshold, or that the ratio of the capacity occupied by the collected images to the maximum capacity of images that may be stored reaches a preset capacity ratio threshold.
(2) Network bandwidth between the apparatus and the server. For example, a preset condition may be set such that the network bandwidth exceeds a preset network bandwidth threshold. The bandwidth threshold may be an absolute threshold, such as 20 MHz, or a relative threshold, such as 50% of the maximum network bandwidth.
(3) Time interval from current time to the last uploading of the first environmental data. For example, the preset condition may be set such that the time interval is greater than or equal to a preset time interval.
(4) Trigger information for triggering the uploading of the first environmental data. The trigger information may include, but is not limited to, at least one of the following: triggering command, driving status of the target vehicle (e.g., braking, turning), or environmental information (e.g., light intensity, degree of visibility). For example, the preset condition may be set such that the trigger information is detected.
(5) Degree of coverage completion of the collection scene of the first environmental data. The degree of coverage completion may be determined based on the ratio of the covered area to the total area of the collection scene, or the ratio of the covered length to the total length of the collection scene. For example, the preset condition may be set such that the degree of coverage completion is greater than or equal to a preset threshold of degree of completion. In some scenarios, the data-collecting vehicle may travel along a specific road segment and collect the first environmental data from that segment during the traveling. This road segment is the data collecting scene, and the length of the road segment is the total length of the data collecting scene. If the ratio of the distance traveled by the data collecting vehicle to the total length of the road segment exceeds a preset ratio threshold, the degree of coverage completion is determined to be greater than a preset threshold of degree of completion, thereby confirming that the preset condition is met.

In some embodiments, the preset conditions may be established based on any one or at least two of the aforementioned types of information. When the preset conditions are established based on at least two types of information, for example, the preset conditions may be set such that the network bandwidth exceeds a preset bandwidth threshold and the volume of the collected first environmental data exceeds a preset volume threshold. The specific method for setting the preset conditions may be determined based on actual needs and will not be elaborated upon further.

The initial environmental data collected by sensors on the target vehicle, by sensors on other vehicles, and by other apparatus deployed around the traffic lane is often redundant. Therefore, the initial environmental data may be screened, and the screened initial environmental data may be used as the first environmental data. For example, the first environmental data may be screened from the initial environmental data collected by sensors on the target vehicle. The aforementioned screening process may be referred to as data mining. The data mining may be performed by the target vehicle, by a server, or jointly by the target vehicle and the server. The data mining process is illustrated below through several embodiments.

In some embodiments, if the initial environmental data meets at least one of the following conditions, the initial environmental data is determined to be the first environmental data:
Condition 1: When the initial environmental data is collected by sensors on the target vehicle, the initial environmental data may be output to at least two processing units on the target vehicle for processing, and each processing unit may output driving control information in response to the initial environmental data. If the driving control information output by at least two processing units on the target vehicle that output the same type of driving control information in response to the initial environmental data is inconsistent, the initial environmental data may be considered potentially erroneous environmental data. Consequently, the value score of this environmental data is increased, thereby mining the initial environmental data as the first environmental data.
Condition 2: The initial environmental data is collected under a specified scenario. For example, when seeking to optimize the perception performance of an initial autonomous driving model in tunnel scenario, it may be necessary to specifically mine environmental data in the tunnel scenario and accumulate more data to improve perception performance. In this case, the specified scenario is the tunnel scenario. Of course, depending on actual data mining needs, the specified scenario could also be any other scenario.
Condition 3: The initial environmental data includes specified traffic elements. For example, the specified traffic elements may include, but are not limited to, traffic elements such as traffic signs, traffic lights, road markings, and road-related infrastructure. The categories of specified traffic elements may be determined based on the tasks which the initial autonomous driving model is intended to perform, or based on the functional development needs of the data center (e.g., semantic map construction).
Condition 4: The processing unit of the target vehicle outputs erroneous driving control information in response to the initial environmental data. Online data mining may be used to identify data indicative of system failures; for instance, when self-diagnostic modules of hardware (such as sensors or domain controllers) send potential erroneous signals, relevant metadata (e.g., current vehicle status, GPS, temperature, etc.) will be saved and transmitted back to the data center for further analysis.
Condition 5: The initial environmental data is collected when the autonomous driving state of the target vehicle is abnormal. The driving state may include driving speed, driving direction, and the like. When the driving state includes the driving speed, the driving state may be considered abnormal if the rate of change in the driving speed exceeds a certain threshold (e.g., the vehicle brakes suddenly). When the driving status includes the driving direction, the driving status may be deemed abnormal if the rate of change in the driving direction exceeds a certain threshold (e.g., a sharp turning), or if the vehicle collides with an obstacle after turning. Additionally, the driving status may also include other status. The abnormal driving conditions under various driving statuses may be determined based on actual scenario and need not be listed exhaustively. A number of initial environmental data collected before and/or after the detection of the abnormal driving status may be mined as the first environmental data.
Condition 6: In some application scenario, the data mining process may be conducted silently in the manual driving mode by comparing the driving control information generated by the processing unit in response to the initial environmental data with the driving control information output by a driver to evaluate the value of the initial environmental data. For example, the vehicle control operations and trajectory planning output by the decision-making and planning unit in response to the initial environmental data may be compared with the operational behavior of the driver. If the two are inconsistent, the initial environmental data is deemed valuable and mined.
Condition 7: Perception results output by the initial autonomous driving model in response to the initial environmental data are inconsistent with actual results. For example, when drivable area output by an online perception module of the target vehicle based on the initial environmental data differs from the drivable area provided by a map, the initial environmental data may be deemed highly valuable and mined.
Condition 8: Uncertainty regarding the output results of the initial environmental data is obtained using certain uncertainty estimation techniques. If the uncertainty exceeds a preset threshold, the initial environmental data is typically considered to have a high value score and is mined.
Condition 9: Data related to the Human Machine Interface (HMI) may also be obtained to help learn the driving habits of a user. For example, the user may select different driving modes under varying road conditions; the first environmental data may be mined from the initial environmental data based on the driving mode. For instance, the initial environmental data collected during a driving mode switching and/or the initial environmental data collected under a preset driving mode may be mined as the first environmental data. For example, road condition features perceived in real time may be recorded along with the driving mode selected by the user and transmitted back to the data center to assist the decision-making and planning unit in optimizing driving comfort.

In addition to the aforementioned preset conditions, other conditions may be flexibly selected as data mining conditions based on actual needs; these conditions will not be listed individually here. In examples where data mining is performed by the target vehicle, a data mining module may be deployed on the target vehicle, and data mining conditions may be set for the data mining module to enable it to mine the first environmental data. This method of data mining is also referred to as online data mining. In examples where data mining is performed by a server, the collected initial environmental data, along with information used to determine whether the data mining conditions are met, may be uploaded to the server. For example, when data mining is carried out based on Condition 1, the information may be driving control information output by various processing units on the target vehicle; when data mining is performed based on Condition 4, the information may be metadata related to system failures. Through the data mining, corner case data that is more meaningful for model training may be mined, thereby improving the effectiveness and efficiency of the subsequent model training process.

After the data mining, part or all of the mined first environmental data may be tagged; this tagging process may be performed manually, automatically, or semi-automatically. The vehicle collecting the first environmental data (the target vehicle or the data-collecting vehicle) may label the data it has collected itself; the first environmental data may be also sent to a server for tagging of the first environmental data on the server end; the vehicle collecting the first environmental data may also perform preliminary tagging of the first environmental data, followed by sending the preliminarily tagged data to the server for further tagging. The process of tagging the collected first environmental data by the vehicle is called online tagging, while the process of tagging the first environmental data by the server is called offline tagging. The online tagging is typically performed automatically, while the offline tagging may be performed automatically, semi-automatically, or manually. The tagging process is described below.

In some embodiments, as an example, the vehicle collecting the first environmental data is the target vehicle. The target vehicle may output driving control information in response to the collected first environmental data, thereby enabling automatic tagging of the first environmental data based on such driving control information. For example, visual sensors of the target vehicle may collect images, and an initial autonomous driving model deployed on the target vehicle may identify traffic lights from the images. If a red light is identified, driving control information instructing the target vehicle to stop and wait is output. Consequently, the traffic light in the image can be automatically tagged with the tagged information of the "red light" category based on this driving control information. The above provides an example of online automatic tagging based on driving control information. Of course, data tagging based on driving control information may also be performed offline. For example, the target vehicle may also directly send both the driving control information and the first environmental data to a server. The server can then re-tag the first environmental data based on the driving control information and predefined strategies. For instance, when the driving control information instructs the target vehicle to stop and wait, the server can determine based on traffic regulations that the traffic light in the image is the red light, thereby automatically tagging the image with the tagged information of "red light" category.

In other embodiments, the first environmental data may also be automatically tagged based on degree of similarity between the first environmental data and template environmental data. The template environmental data serves as reference environmental data and generally includes more accurate tagged information. When the degree of similarity exceeds a preset threshold of degree of similarity, tagged information of the template environmental data may be adopted as tagged information of the first environmental data. For example, when the first environmental data is an environmental image containing a traffic signal, a template image tagged with "red light" category can be obtained, and the similarity between the traffic signal in the environmental image and the traffic signal in the template image may be calculated. If this similarity exceeds a preset threshold, the tagged information of "red light" category is adopted as tagged information of the traffic signal in the environmental image. The process of automatic tagging based on degree of similarity can be implemented through online or offline tagging. When the online tagging is implemented, the target vehicle may acquire template environmental data and its tagged information from the server and calculate the degree of similarity between the collected first environmental data and the template environmental data; when the offline tagging is implemented, the target vehicle may send the collected first environmental data to the server, so that the server calculates the similarity between the first environmental data and the template environmental data.

The automatic tagging process may be implemented based on machine learning models deployed on a server. For example, recognition or detection models may be deployed on a server to identify or detect traffic elements in the first environmental data. These recognition or detection models may be used to label traffic elements in the first environmental data to obtain tagged information.

Although the automatic tagging process may effectively improve tagging efficiency, it is sometimes difficult to guarantee the accuracy of the tagged information. Therefore, tagged information obtained after automatic tagging may be further adjusted through manual annotation. To save human resources, only a portion of the first environmental data that has been automatically tagged may be screened for manual annotation. The following provides examples of screening conditions.

Condition 1: Tagged information obtained from the first environmental data after automatic tagging includes tagged information corresponding to specified scenes. For example, when seeking to optimize the perception performance of an initial autonomous driving model in tunnel scenes, it may be necessary to specifically mine environmental data in tunnel scenario. To improve the accuracy of this mining, the first environmental data automatically tagged as tunnel scenes may be verified through manual annotation. If the tagged information obtained from automatic tagging is incorrect, it may be corrected through manual annotation.

Condition 2: Tagged information obtained from the first environmental data after automatic tagging includes tagged information corresponding to specific traffic elements. For example, when aiming to optimize the recognition accuracy of traffic lights by an initial autonomous driving model, it may be necessary to specifically mine environmental images containing traffic lights. To improve mining accuracy, the environmental images automatically tagged as containing traffic lights may be verified through manual annotation. If the tagged information obtained from automatic tagging is incorrect, namely the environmental images do not contain traffic lights, the tagged information may be corrected through manual annotation.

Condition 3: The target vehicle outputs erroneous driving control information in response to the first environmental data. Whether the driving control information is erroneous may be determined based on the autonomous driving state of the target vehicle after it responds to such driving control information. If the autonomous driving state after responding to the driving control information becomes abnormal, it is determined that erroneous driving control information is output. For example, if the target vehicle outputs driving control information indicating left turning in response to a single frame of environmental images, but the target vehicle collides with an obstacle (such as a wall) during left turning, the autonomous driving state is determined to be abnormal, and the driving control information regarding left turning is determined to be erroneous. Whether the driving control information is erroneous may also be determined based on the discrepancy between the driving control information and reference driving control information output by a driver. If the two are inconsistent, the driving control information is determined to be erroneous. For example, if the target vehicle outputs driving control information indicating left turning in response to a single frame of environmental images, but the driver outputs reference driving control information indicating straight-ahead movement, the two are inconsistent, resulting in the output of erroneous driving control information. The above situation indicates that the environmental images may be corner case data that the model cannot process, thereby requiring manual annotation to improve tagging accuracy.

Condition 4: The first environmental data is collected when the target vehicle is in an abnormal autonomous driving state. The abnormal autonomous driving states may include, but are not limited to, safety incidents (e.g., colliding with an obstacle), emergency braking, or sharp turning. These abnormal autonomous driving states may be caused by the first environmental data being corner case data that the model cannot process, thereby requiring manual annotation to improve tagging accuracy.

In practical applications, the first environmental data requiring manual annotation may be determined based on at least one of the above conditions. In addition to the conditions listed above, other conditions may also be applied; these conditions are not listed here in their entirety.

The following provides an example of an application scenario requiring manual annotation. In this scenario, the first environmental data and tagged information corresponding to the first environmental data may be displayed on a manual annotation interface, and the tagged information may be adjusted based on operations performed by a annotation operator on the manual annotation interface. The tagged information may be obtained through automatic tagging described in any of the preceding embodiments; for example, it may be obtained by a recognition model deployed in a server which labels traffic elements in the first environmental data.

Figure 2 illustrates a schematic diagram of a manual annotation interface 200. The manual annotation interface 200 may be used to display an image P to be tagged, as well as tagged information of traffic elements in the image P. This tagged information may be obtained through automatic tagging. For ease of viewing, the tagged information of each traffic element may be displayed around the corresponding traffic elements. The tagged information may include the category of the traffic elements, such as traffic signals, and may also include the locations of the traffic elements. These locations may be represented by coordinates, such as (x1, y1), (x2, y2), and (x3, y3) in the figure. The manual annotation interface 200 may include: a menu bar 201, which may include one or more controls 2011, such as a file control, for opening images to be tagged under a specific storage path; a tool control, for calling up tools required for manual annotation; a view control, for adjusting views during the annotation; and a design control, for designing the display effects of the manual annotation interface 200. By calling up various tools, operations such as adding, deleting, modifying and the like may be performed on automatically generated tagged information. For example, if an object with coordinates (x1, y1) is actually a hot air balloon rather than traffic lights, such tagged information may be deleted. This embodiment uses manual annotation as auxiliary tagging, and automatic tagging as primary tagging, which may reduce human participation during the data tagging, thereby improving data tagging efficiency and lowering labor costs.

After data tagging, in Step 102, the server may train a copy of an initial autonomous driving model based on the first environmental data to obtain a target autonomous driving model. In some embodiments, the target autonomous driving model may be obtained by training a copy of the initial autonomous driving model based on the first environmental data and at least some of the following information:
Tagged information of the first environmental data. The tagged information here may be obtained through automatic tagging described in any of the preceding embodiments, or it may be obtained through automatic tagging followed by adjustments through manual annotation.

Driving control information of the target vehicle in response to the first environmental data. For example, the driving control information described above for controlling the turning of the target vehicle. Such driving control information may be sent by the target vehicle to the server.

The driving mode at the time of collection of the first environmental data, including autonomous driving mode and manual driving mode. The autonomous driving mode may be classified into multiple autonomous driving levels, and different autonomous driving levels can assign different autonomous driving authority to a vehicle. In the autonomous driving mode, the vehicle may achieve assisted driving or unmanned driving. The manual driving mode refers to a mode of driving by a human driver; in this mode, the autonomous driving model deployed on the vehicle may operate in a silent state. In this silent state, the model may perceive the surrounding environment and generate driving control information. This driving control information may be sent to a server for model training.

In a specific application scenario, first environmental data may be collected by sensors on a target vehicle. Before deploying a target autonomous driving model to the target vehicle, an initial autonomous driving model deployed on the target vehicle processes the first environmental data in real time and generates all or part of the driving control information of the target vehicle based on real-time processing results. Based on the collected first environmental data and the driving control information generated from processing of the first environmental data, a copy of the initial autonomous driving model may be trained to obtain the target autonomous driving model. In the application scenario of this embodiment, it is possible to achieve automatic online data mining and model training, reduce human participation in the process and lower labor costs.

In Step 103, the target autonomous driving model may be deployed to the target vehicle. Once deployed, the target autonomous driving model may be used to replace the initial autonomous driving model to output driving control information. This process is referred to as model iteration or system iteration.

To ensure the performance of the target autonomous driving model, the target autonomous driving model may also be tested on a test vehicle prior to deployment. Specifically, the target autonomous driving model may be sent to the test vehicle. During the driving of the test vehicle, driving control information generated by the test vehicle based on the target autonomous driving model is acquired. If the driving control information generated by the test vehicle based on the target autonomous driving model meets preset conditions, the target autonomous driving model is deployed to the target vehicle.

For example, after sending the target autonomous driving model to the test vehicle, the target autonomous driving model may recognize traffic lights in the surrounding environment and generate driving control information to control the moving speed of the test vehicle based on recognition results. For instance, upon recognizing a red light, the model may output driving control information controlling the test vehicle to stop and wait. When a green light is recognized, the model may output driving control information controlling the test vehicle to pass normally. If matching condition between the driving control information and actual scenario meets the requirement, preset conditions are deemed satisfied, and the target autonomous driving model is thus deployed to the target vehicle.

If the driving control information generated by the test vehicle based on the target autonomous driving model does not meet the preset conditions, prompt information is generated to indicate that the deployment of the target autonomous driving model is terminated. Continuing with the previous example, if matching conditions between the driving control information and actual scenario do not meet the requirements, this indicates that the performance of the target autonomous driving model has not yet reached the standards, and therefore the deployment may be terminated. In the above example, if the vehicle state indicated by the driving control information is inconsistent with the vehicle state indicated by the environmental data collected by the test vehicle, this indicates that the driving control information does not match the actual scenario. If the two are consistent, this indicates that the driving control information matches the actual scenario. For example, if driving control information is output to control the test vehicle to pass normally when a red light is on, this indicates a mismatch between the driving control information and the actual scene. The matching conditions may be deemed satisfied if the probability of a mismatch between the driving control information and the actual scene is less than a preset probability threshold; otherwise, the matching conditions are deemed unsatisfied. Of course, the method of determining matching and the matching conditions are not limited to this example.

After deploying the target autonomous driving model to the target vehicle, environmental data (referred to as second environmental data) may continue to be collected during the operation of the target autonomous driving model by the target vehicle. The format, the included scenario and the categories of traffic elements of the second environmental data may be the same as or different from those of the first environmental data. In the case that any of the information regarding data format, included scenes, or categories of traffic elements differs, for example, the second environmental data may include video-format data, while the first environmental data may include image-format data. Another example is that the second environmental data may include images of tunnel scenes, while the first environmental data may include data of intersection scenes. Yet another example is that the second environmental data may include traffic lights, while the first environmental data may include traffic signs.

All or part of the driving control information of the target vehicle may be generated based on real-time processing results of the second environmental data by the target autonomous driving model. For example, driving control information used to control the moving speed of the target vehicle may be generated based on the output by the target autonomous driving model regarding the distance between objects in environmental images and the target vehicle.

The performance of the target autonomous driving model generally better than that of the initial autonomous driving model. For example, the target autonomous driving model achieves higher recognition accuracy of traffic lights than the initial autonomous driving model. Therefore, after deploying the target autonomous driving model, more authority may be granted to the target vehicle.

Optionally, granting more authority to the target vehicle is reflected in the fact that the target autonomous driving model may generate driving control information that the initial autonomous driving model cannot generate. Assuming that the driving control information generated based on real-time processing results of the first environmental data by the initial autonomous driving model includes a first type of information, and the driving control information generated based on real-time processing results of the second environmental data by the target autonomous driving model includes a second type of information, then the second type may include types other than the first type. For example, the first type of information includes information used to control the driving speed of the target vehicle, while the second type of information includes information used to control the driving speed of the target vehicle as well as information used to control the driving lane of the target vehicle.

Optionally, granting more authority to the target vehicle authority is reflected in the fact that the control range over the driving state of the target vehicle exerted by the driving control information output by the target autonomous driving model may be improved. Assuming that the driving control information output by the initial autonomous driving model may control the driving state of the vehicle within a first range of values, and the driving control information output by the target autonomous driving model may control the driving state of the vehicle within a second range of values, then the first range of values is a subset of the second range of values. For example, the driving control information output by the initial autonomous driving model may control the driving speed of the vehicle within the range [0, 50 km/h], while the driving control information output by the target autonomous driving model may control the driving speed of the vehicle within the range [0, 90 km/h].

In some embodiments, the operation of granting more authority to the target vehicle authority described above may be performed automatically. As one implementation, in response to completion of deployment of the target autonomous driving model, target authority that match the performance of the target autonomous driving model may be obtained authority. If the target authority include authority that have not yet been granted, the authority that have not yet been granted are granted to the target vehicle. The authority that have not yet been granted refer to part or all of the authority of the target vehicle, except for those that have already been granted. The target vehicle may label the granted and ungranted authority separately. For example, granted authority may be tagged as "granted" (e.g., represented by "1"), and ungranted authority may be tagged as "ungranted" (e.g., represented by "0"). Each permission and its tagged information may be stored correspondingly in a permission list. After the deployment of the target autonomous driving model is completed, it may be determined from the permission list whether there are authority tagged as "ungranted" in the target authority. If so, the authority tagged as "ungranted" in the target authority are granted to the target vehicle.

Furthermore, the target permission level matching the performance of the target autonomous driving model may be obtained. If this level is higher than the currently granted permission level, the authority corresponding to the target permission level are granted to the vehicle. For example, if the autonomous driving permission granted to the target vehicle is Level L1 prior to deploying the target autonomous driving model, then after deployment of the target autonomous driving model, autonomous driving authority higher than Level L1 may be granted to the target vehicle, such as autonomous driving authority Level L2authority.

This disclosure is applicable to the fields of autonomous driving, robotics, artificial intelligence, and deep learning. As a general-purpose, efficient, data-driven system iteration method, it may be applied to robotic products, including intelligent systems such as drones and autonomous vehicles. The iteration and performance enhancement of deep learning-based intelligent systems depend on three key factors: data, algorithms, and computing power. The data-driven intelligent system iteration scheme proposed in this disclosure establishes a data closed-loop to cover the entire process of intelligent system iteration, including data collection, data analysis, data tagging, model training, model evaluation, software testing, and software deployment. It efficiently integrates these stages to establish an automated workflow. For autonomous driving systems, very large-scale road test data needs to be processed. Currently, data processing and analysis typically rely heavily on labor costs, and the efficiency is extremely low, making it difficult to support large-scale and rapid system iteration requirements. Adopting the method of the present disclosure may effectively improve data utilization, efficiently mine data value, and reduce the cost of manual data processing.

The following provides an illustrative example of the overall process of the present disclosure. It should be understood that the following process is merely illustrative; one or more processing steps or modules in the process may be omitted or replaced as required. The solution of the present disclosure establishes a data closed-loop covering both a deployment end and a cloud end, wherein the deployment end refers to a target vehicle requiring the deployment of an autonomous driving model, and the cloud end refers to a server end.

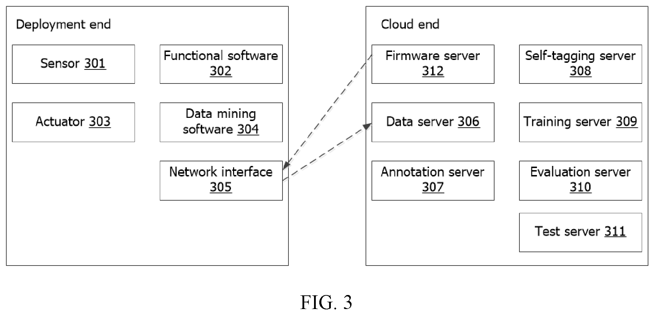

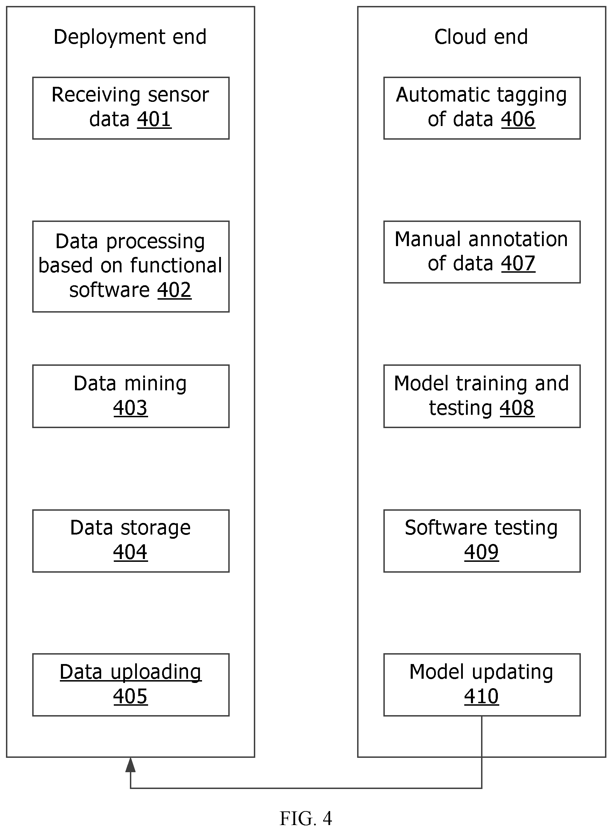

Figure 3 is a structural schematic diagram of a deployment end and a cloud end. The deployment end may include a sensor 301, functional software 302, an actuator 303, data mining software 304, and a network interface 305. The sensor 301, such as a visual sensor, millimeter-wave radar, LiDAR, ultrasonic sensor, or IMU, is used to collect environmental data. The functional software 302 is used to process the environmental data collected by the sensor 301, and output information is used to control the actuator 303, such as accelerator and steering wheel, thereby controlling the autonomous driving state of a target vehicle. The data mining software 304 may perform data mining on the environmental data collected by the sensors and upload the mined data to the cloud end via the network interface 305. Refer to Figure 4, the processing flow on the deployment end is as follows:
Step 401: Acquiring sensor data. Sensor data collected during the driving of an autonomous vehicle (i.e., the target vehicle), such as image data collected by cameras, point cloud data collected by millimeter-wave radar or LiDAR, and GPS data, is acquired in real time.
Step 402: Processing data using functional software. The sensor data is processed using functional software to implement the functions required by the autonomous driving system. For autonomous driving, software modules such as perception, decision-making and planning, vehicle control and the like are typically included.
Step 403: Online data mining. The purpose of the online data mining is to extract valuable data for storage and transmission back to the data center (i.e., the server) to support the data requirements of system iteration. The currently acquired data is analyzed based on results of functional software processing or certain intermediate results, and specific algorithms and strategies are used to score the data value in order to determine whether to store the data collected at that moment.

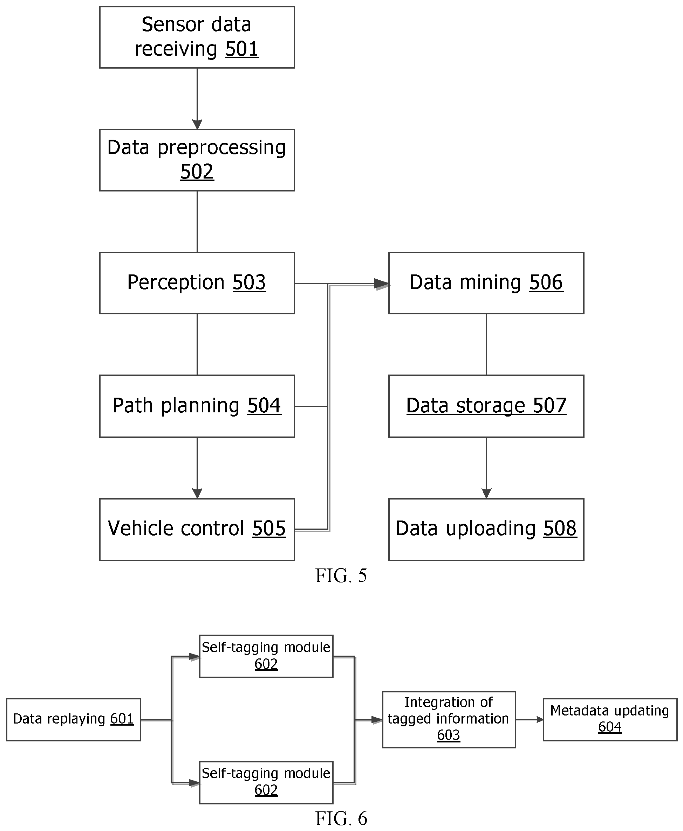

The data mining module typically consumes relatively few computing resources. For example, it may use lightweight classifiers (such as SVM or MLP) to classify data scenario, helping to determine whether a given scenario is an expected optimized scene. The data mining module may receive results from certain functional software modules as input and employ some strategies to perform data mining. As shown in Figure 5, functional software modules may include perception modules, path planning modules, vehicle control modules, and others. The data mining module may employ various strategies for data mining; for example, it may mine potential erroneous environmental data, environmental data of specific scenario, and environmental data including specified traffic elements. Specific mining strategies are described in detail in the preceding embodiments. As shown in the figure, in this embodiment, sensor data is first received (Step 501), followed by preprocessing of the sensor data (Step 502), such as sampling of the sensor data at a certain frequency. Next, the preprocessed sensor data undergoes perception (Step 503), path planning (Step 504), and vehicle control (Step 505) in sequence. Data mining may be performed based on results of perception, path planning, and vehicle control (Step 506). The mined data is then stored (Step 507) and uploaded at an appropriate time (Step 508).

Step 404: Online data storage. Data is automatically stored based on results of online data mining. This module may support flexible storage configuration; for example, it may select which sensor data streams and algorithm results to store, and specify the frame rate for storage. For instance, when the vehicle is traveling at a relatively high speed, data may be stored at 20 Hz; when the vehicle is traveling at a relatively low speed, data may be stored at 5 Hz.

Data storage may also choose different data compression algorithms for different situations. For example, when network signal is poor or uploading bandwidth is small, an algorithm with a higher compression ratio is selected; conversely, when network signal is strong or uploading bandwidth is large, an algorithm with a lower compression ratio is chosen to maximize data fidelity.

Step 405: Data uploading. This module uploads the data stored online to the data center at the cloud end via a certain communication interface, such as using 4G networks, Wi-Fi, or wired networks for transmission. The module may choose appropriate timing to upload data rather than transmitting it back in real time. For example, data uploading is automatically triggered when the target vehicle is in manual driving mode and network bandwidth resources are sufficient.

The cloud end may include: a data server (306), which uses a database to centrally manage all data, including raw data, self-tagged data, and ground-truth data; an annotation server (307), which supports manual annotation services, including workflow management for the tagged data (data transfer, annotation, quality control, etc.), and may also be referred to as a manual annotation server; a self-tagging server 308, used for large-scale offline data mining and automatic tagging; a training server 309, used for large-scale model training; an evaluation server 310, used for model evaluation and testing; a test server 311, used for software automation testing; and a firmware server 312, used to push firmware to the deployment end. Referring again to Figure 4, the processing flow on the cloud end is as follows:
Step 406: Offline data self-tagging. When data is transmitted back to the data center, data self-tagging is automatically triggered. The objectives of the data self-tagging include: a) mining valuable data for improving the performance of the initial autonomous driving model from the raw data for model iteration; b) applying labels to the raw data (i.e., tagging information) to meet various usage requirements. For example, a self-tagging algorithm may be developed to identify scenarios where a vehicle cuts in line, automatically mining and tagging data from such scenario where a vehicle cuts in line for subsequent model iteration and testing. The overall process of the data self-tagging is shown in Figure 6. First, data replaying may be performed (Step 601), followed by automatic tagging of the replayed data through one or more self-tagging modules (Step 602). Each self-tagging module may employ different self-tagging methods and/or label different data. The tagged information from individual self-tagging modules is then integrated (Step 603), followed by updating of metadata (Step 604). The updated metadata is environmental data with tagged information.

The offline data self-tagging may involve a wide variety of self-tagging algorithms. Parallel computation is possible through different algorithms, with the computing results aggregated at a single node for comprehensive processing. Labels generated by the offline data self-tagging may include labels of varying granularity and types. For example, they may include single-frame scene labels (such as rainy day scenes or nighttime scenes) and temporal scene labels (such as cutting-in-lane or off-ramp scenes). Since this is offline computation, offline data self-tagging may be achieved using very complex models and algorithms. Compared to online data mining, this step may obtain more precise data labels.

For the offline data self-tagging, multiple self-tagging strategies may be operated in parallel. For example, complex, high-precision deep learning classification models may be used to classify each frame of image data and assign scene labels to it (such as rainy day scenes, nighttime scenes, tunnel scenes, etc.). As another example, video analysis technologies (such as deep learning-based video classification algorithms) may be used to automatically segment a long piece of video data to obtain several short data sequences, and automatically assign scene labels (e.g., cutting-in-lane scenes, off-ramp scenes, intersection-crossing scenes, etc.) to each short data sequence. As yet another example, temporal fusion and 3D reconstruction techniques may be utilized to automatically generate ground-truth data for lane lines. For instance, by combining high-precision vehicle pose estimation, visual depth estimation, and 3D reconstruction algorithms to reconstruct a segment of temporal data, a top-down stitched image may be obtained, and complex, high-precision lane line detection models may be used for automatic lane line tagging. Lane lines tagged in this manner may contain some errors or noise; therefore, subsequent manual tagging and verification are typically required to obtain accurate ground truth data. Another example involves using multi-sensor information to achieve self-tagging of dynamic obstacles. For instance, certain depth sensors (such as LiDAR) may be used to automatically obtain distance information for objects in an image. For instance, millimeter-wave radar may be used to automatically obtain velocity information for objects in an image. The offline data auto-tagging may also extract specific frames of data for subsequent manual tagging. For instance, when the data self-tagging recognizes a certain frame of data with a high probability of containing traffic cones, that frame of data may be extracted and sent to an annotation operator for secondary tagging or verification. Additionally, the offline data auto-tagging may utilize existing data feature templates for data search to mine data with specific characteristics. For instance, if a database already contains a small amount of data depicting "trucks transporting passenger cars", a feature template (typically represented as a feature vector) may be obtained based on calculation of the small amount of data. This template is then used to compute features for new data by using the same feature extractor, and search for data for similar scenes by calculating the degree of similarity between the feature template and the features of all new data. Other methods for offline data auto-tagging may be found in the aforementioned automatic tagging examples and will not be elaborated upon here.

Step 407: Data Annotation. Since tags generated by the self-tagging algorithms may not be accurate and may contain noise, the data requires manual tagging or cleaning to obtain ground-truth data with higher accuracy. Additionally, some labels may not be obtainable through self-tagging methods and must be acquired through manual tagging.

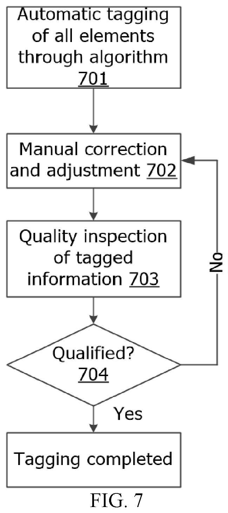

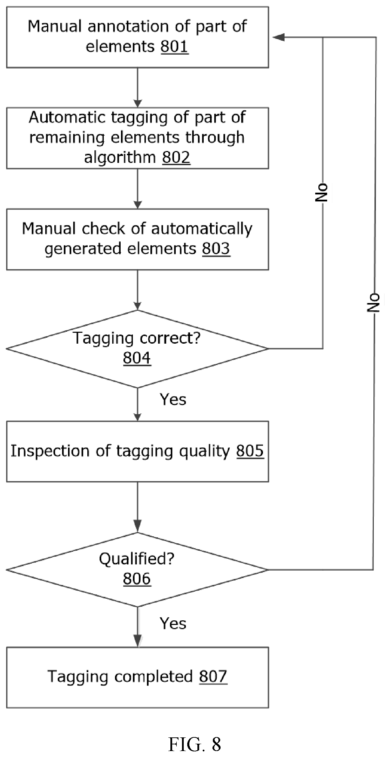

It should be noted that the distinction between data annotation at this stage and self-tagging at the previous stage lies in the fact that data annotation involves human participation, whereas data self-tagging is a fully automated process achieved through algorithms, which consequently renders the data tags generated at this stage may contain some noise. The data annotation may be performed through manual tagging, and the semi-automated annotation is achieved by combining certain algorithmic processes. Figures 7 and 8 illustrate two semi-automated annotation approaches.

Figure 7 illustrates a semi-automated data annotation approach based on pre-labeling. This approach first uses algorithms to pre-label the data, automatically generates ground truth for all elements (Step 701), and sent it to annotation operators for manual correction and adjustment of tagged information (Step 702). Furthermore, all data annotated by the annotation operators must undergo a quality inspection process (Step 703), and it is determined based on inspection results whether the quality of annotated data is qualified (Step 704). The quality inspection may be performed manually, or performed automatically using trained machine learning models. For example, when annotating 2D bounding boxes for objects in images, high-precision object detection algorithms may be used to automatically generate 2D bounding boxes. Annotation operators need only to check and correct the results generated by the algorithm to complete the annotation. If the check is passed, the annotation is completed, and the annotated data may be updated to the database; otherwise, the process returns to Step 702. This approach may significantly improve data annotation efficiency.

Figure 8 illustrates an interactive semi-automated data annotation approach. This approach requires human annotation operators to manually annotate certain elements of the data (Step 801). The algorithm then automatically generates ground truth for the remaining elements based on the manual initial human annotations (Step 802), then algorithm-generated ground truth is checked and corrected manually (Step 803). The process of generating ground truth through algorithms and manually correcting it may be performed iteratively and therefore is an interactive annotation process. During the iteration, it may be determined whether the annotation information (i.e., labels) automatically generated by the algorithm is correct (Step 804). If so, proceed to the next step; otherwise, return to Step 801. Similar to the approach in Figure 7, once an annotation operator completes the annotation, a final quality check is performed (Step 805) to determine whether it passes the quality check (Step 806). If it passes the quality check, the annotation is completed; otherwise, return to Step 801. For example, in the case of pixel-level annotation of object contours in an image, key points on the contours may be manually annotated by the annotation operator. The algorithm then automatically generates the remaining key points on the contour, and the annotation operators manually correct the algorithm-generated points. This process is repeated iteratively until accurate ground truth results are obtained.

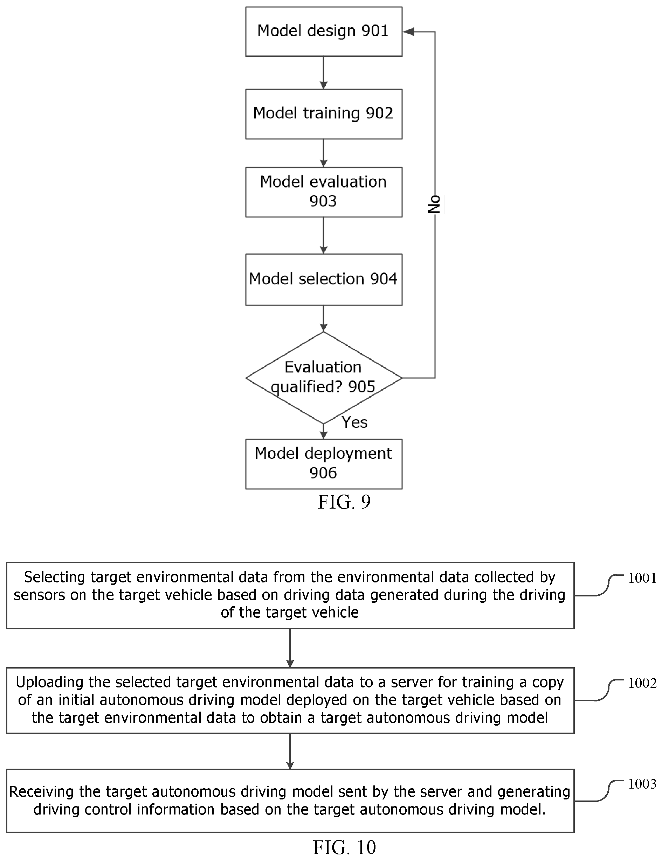

Step 408: Model development. When data is updated, the system automatically executes a model development process, as shown in Figure 9. Model development includes the following stages:
Model design (Step 901): The model architecture and hyperparameters are determined. Typically, several hyperparameters may be set to generate multiple models, and model selection is then performed based on the evaluation results.
Model training (Step 902): Certain model optimization techniques are used to obtain the model parameters.
Model evaluation (Step 903): Model performance is evaluated by using a large number of test cases and metrics.
Model selection (Step 904): optimal model based on the performance metrics for the model evaluation. If the performance of selected model does not meet the predefined threshold, return to the model design to re-adjust the model structure or parameters.
Evaluation criteria assessment (Step 905): Model performance is evaluated based on preset evaluation criteria. If the evaluation is qualified, proceed to the next step; otherwise, return to Step 901.
Model conversion (Step 906): The model from a training end platform (typically a GPU) to a deployment end platform (such as a dedicated neural network accelerator).
Step 409: Software testing. After the model is updated, the process moves to the software integration and testing phase. This process may also be automated. The software testing phase executes a large number of test cases; based on the results of these test cases, the quality of software version is automatically determined, thereby deciding whether to release it. Test cases may be defined based on specific scenarios. For example, for a cutting-in-line scenario of a vehicle, data for that scenario is collected, covering different weather conditions, road structures, and traffic densities, to serve as test data.
Step 410: Software updating. After thorough testing, the software may be pushed to users for updating. For example, updating may be performed using OTA (Over-The-Air). Software updating includes updating of both functional software and data mining software, and the updating frequencies for the two may differ. When faced with new development requirements, the data mining software may be updated. For example, if the system is expected to support a new feature such as traffic cone detection, the data mining strategies may be updated to mine a large volume of data on traffic cone scenario, thereby facilitating model iteration and rapid performance improvement.

In summary, the deployment end focuses on how to mine valuable environmental data and upload it to the data center, while the cloud end focuses on how to efficiently utilize the data for model iteration and software testing. As the performance of cloud end models gradually improves, the online data mining strategies at the deployment end will also evolve to meet the data acquisition needs of different stages.

By establishing the link between the deployment end and the cloud end, the present disclosure enables the cloud end to more quickly obtain actual usage results and feedback from the deployment end, thereby achieving faster system iteration. In contrast, traditional development processes typically involve lengthy procedures for data collection and data analysis, resulting in slower iteration speeds.

Furthermore, this disclosure establishes a data-centric closed-loop for development and testing. Once the target autonomous driving model is deployed, the online data mining module may quickly obtain its actual performance and collect valuable data to transmit back to the cloud end, supporting the iteration of the next software version. Through this data loop, software shortcomings may be identified more quickly and accurately, guiding improvements. Furthermore, by establishing automated workflows across the entire solution, system iteration efficiency is enhanced, and manual effort is reduced.

As shown in Figure 10, the present disclosure also provides a target vehicle control method, which is applied to the target vehicle. The method includes:
Step 1001: Selecting target environmental data from the environmental data collected by sensors on the target vehicle based on driving data generated during the driving of the target vehicle;
Step 1002: Uploading the selected target environmental data to a server so that the server may train a copy of an initial autonomous driving model deployed on the target vehicle based on the target environmental data to obtain a target autonomous driving model;
Step 1003: Receiving the target autonomous driving model sent by the server and generating driving control information based on the target autonomous driving model.

The embodiments of the present disclosure automatically select target environmental data from the environmental data collected by sensors on the target vehicle based on driving data generated during the driving of the target vehicle, thereby enabling online data mining and selective uploading of target environmental data. On the one hand, this online mining and automatic uploading method reduces manual intervention; on the other hand, it reduces the volume of target environmental data that the server must process, thereby improving the quality of the sample data. This enhances the efficiency of the server in training the target autonomous driving model and improves the performance of the trained target autonomous driving model. Consequently, this results in higher reliability and accuracy of the driving control information generated by the target vehicle based on the target autonomous driving model, thereby improving the driving safety of the target vehicle.

In Step 1001, the driving data of the target vehicle refers to a series of parameters generated during the driving of the target vehicle, such as engine start and stop time, engine temperature, rotating speed, throttle opening, operating duration, battery voltage, transmission gear and shift mode, driving speed of the target vehicle speed, steering angle, brake system status, and the operating status of various auxiliary components, among others. For electric vehicles, driving data also includes motor operating status, power battery voltage, and electronic control system operating status. Additionally, driving data may include the target vehicle's real-time location and driving trajectory of the target vehicle.

During the driving of the target vehicle, sensors on the target vehicle may collect environmental data. The environmental data may be the initial environmental data described in the preceding embodiments, which may include one or more traffic elements. The initial environmental data is generally redundant; therefore, target environmental data (i.e., the first environmental data mentioned earlier) may be screened from it. The screened target environmental data is a subset of the initial environmental data. The volume of the target environmental data may be significantly smaller than that of the initial environmental data.

In some embodiments, the target environmental data meets at least one of the following conditions: the driving control information output by at least two processing units on the target vehicle regarding the target environmental data is inconsistent, wherein the types of driving control information output by the at least two processing units are the same; the data is collected in specified scenario; the data includes specified traffic elements; the processing units on the target vehicle output erroneous driving control information in response to the target environmental data; the data is collected when the autonomous driving state of the target vehicle is abnormal; the driving control information output by the processing units on the vehicle in response to the target environmental data is inconsistent with driving control information output by a driver; perception results output by the initial autonomous driving model in response to the target environmental data are inconsistent with actual results. The process of screening target environmental data from the initial environmental data may refer to the aforementioned embodiments of the online data mining process. Since the online data mining process has been described in detail earlier, for the sake of brevity, it will not be elaborated upon here.

In Step 1002, the target environmental data may be uploaded to the server via a communication interface between the target vehicle and the server. Prior to uploading, the target vehicle may store the target environmental data. The stored target environmental data may be uploaded in real time or at an appropriate timing. The timing may be set based on information such as the volume of collected target environmental data, network bandwidth between the vehicle and the server, time interval between current time and last time the target environmental data was uploaded, triggering information for triggering the uploading of the target environmental data, and degree of coverage completion of the collection scenes of the target environmental data. The specific setting methods are described in detail in the previous embodiments and will not be repeated here.

In some embodiments, the data uploading process may be triggered on the server end, or the target vehicle may actively upload data. In cases where the target vehicle actively uploads data, the conditions for triggering the data uploading may be pre-stored in the target vehicle, and a port number of the server may also be stored in the target vehicle. The target vehicle may monitor the conditions for triggering the data uploading in a specific manner. If the conditions are met, the collected target environmental data is sent to the pre-stored port number. In examples where data uploading is triggered by the server, the conditions for triggering the data uploading may be stored in the server in advance, and a port number of the target vehicle may also be stored in the server. The server may monitor the conditions for triggering the data uploading in a specific manner. If the conditions are met, the server sends a triggering command to the pre-stored port number. The triggering command may include the port number of the server. Upon receiving the triggering command, the target vehicle may send the collected target environmental data to the port number included in the triggering command.

After receiving the target environmental data, the server may also perform automatic tagging and/or manual annotation of the target environmental data, and train a copy of an initial autonomous driving model based on the target environmental data and at least some of the following information to obtain a target autonomous driving model. The tagged information for the target environmental data includes: driving control information of the target vehicle in response to the target environmental data; and the driving mode at the time the target environmental data is collected. The target autonomous driving model and its training method are described in detail in the preceding embodiments and will not be repeated here.

In Step 1003, upon receiving the target autonomous driving model, the target vehicle may generate driving control information based on the target autonomous driving model, such as driving control information used to control the moving speed of the target vehicle.

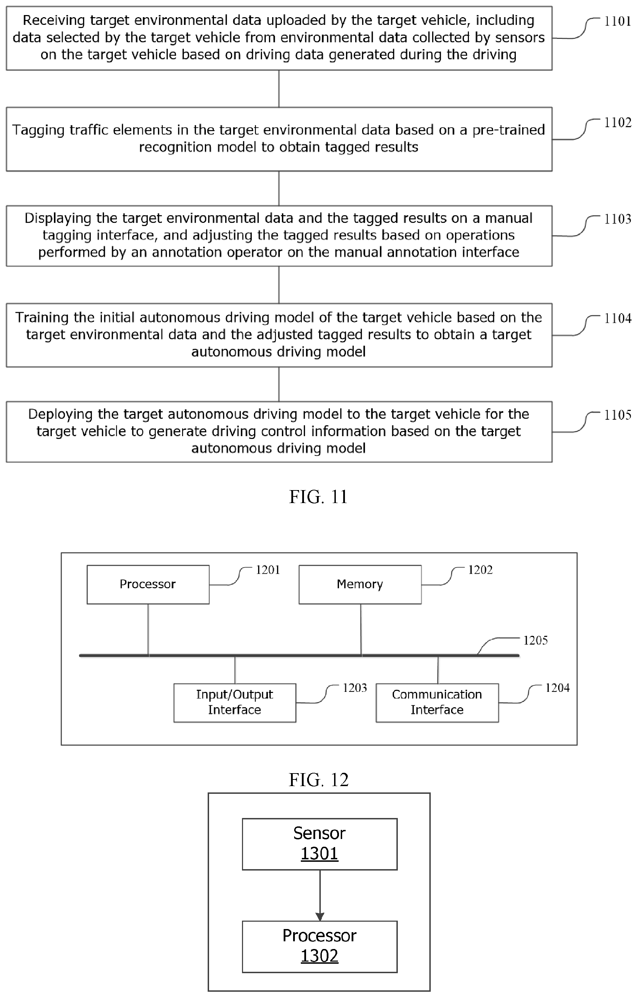

As shown in Figure 11, the present disclosure also provides a target vehicle control method, which is applied to a server. The method includes:
Step 1101: receiving target environmental data uploaded by the target vehicle, the target environmental data including data selected by the target vehicle from environmental data collected by sensors on the target vehicle based on driving data generated during the driving;
Step 1102: tagging traffic elements in the target environmental data based on a pre-trained recognition model to obtain tagged information;
Step 1103: Displaying the target environmental data and the tagged information on a manual interface, and adjusting the tagged information through operations of annotation operator on the manual annotation interface;
Step 1104: Training the initial autonomous driving model of the target vehicle based on the target environmental data and the adjusted tagged information to obtain a target autonomous driving model;
Step 1105: Deploying the target autonomous driving model to the target vehicle, so that the target vehicle generates driving control information based on the target autonomous driving model.

In the embodiments of the present disclosure, upon receiving the target environmental data, the server first automatically tags the traffic elements in the target environmental data based on a pre-trained recognition model, and then displays the target environmental data and its tagged information on the manual annotation interface to facilitate further manual adjustment of the automatically annotated information. The above approach uses automatic tagging as primary tagging and manual annotation as auxiliary tagging. Since the automatic tagging process of the model is highly efficient, it is possible through automatic tagging of the model to effectively reduce human involvement in the tagging process and improve data tagging efficiency. At the same time, due to the higher accuracy of manual annotation, , the target autonomous driving model trained based on the tagged information adjusted manually and the target environmental data exhibits better performance.

In Step 1101, the target environmental data refers to the first environmental data mentioned earlier, and the environmental data collected by sensors refers to the initial environmental data mentioned earlier.

In Step 1102, the recognition model may automatically tag traffic elements in the target environmental data. The recognition model may be pre-trained and deployed on a server to recognize one or more specified categories of traffic elements, including but not limited to traffic lights, traffic signs, road markings, pedestrians, and others. In some embodiments, the recognition model may include multiple sub-models, with each sub-model designed to recognize a specific type of traffic element. The recognition model may recognize traffic elements of specified categories and output the recognition results.

In some embodiments, the target environmental data consists of images, and the recognition results include location and size information of traffic elements of a specified category within the images. The recognition model may automatically generate the tagged information based on the location and size information. For example, the tagged information may be bounding boxes or coordinate information for traffic elements of a specified category within the images, or pixels belonging to traffic elements of a specified category within the images marked in a specific color. In other embodiments, the target environmental data is audio data, and the recognition model may recognize audio emitted by traffic elements of a specified category and tags the spectral range of that audio. The target environmental data may also be other types of data; other tagging methods may be adopted for tagging other types of target environmental data as required, and these are not listed here.

In Step 1103, the target environmental data and its corresponding tagged information may be displayed on the manual annotation interface. For example, when the target environmental data is an image, the image and its tagged information such as bounding boxes and coordinates may be displayed on the manual annotation interface. When the target environmental data is audio data, spectral features of the audio data and its spectral range may be displayed on the manual annotation interface. The annotation operator may use human-computer interaction devices such as a mouse, keyboard, or touchscreen to perform corresponding operations on the manual annotation interface, such as increasing, decreasing, and/or modifying the tagged information for one or more traffic elements in the target environmental data.

In Step 1104, a copy of the initial autonomous driving model may be trained based on the target environmental data and the adjusted tagged information to obtain the target autonomous driving model. The training process is described in detail in the preceding embodiments and will not be repeated here.

In Step 1105, the trained target autonomous driving model may be deployed to the target vehicle via a server, so that the target autonomous driving model may output all or part of the driving control information of the target vehicle, such as speed control information.

In some embodiments, deploying the target autonomous driving model to the target vehicle includes: sending the target autonomous driving model to a test vehicle; during the driving of the test vehicle, obtaining the driving control information generated by the test vehicle based on the target autonomous driving model; and deploying the target autonomous driving model to the target vehicle, if the driving control information generated by the test vehicle based on the target autonomous driving model meets preset conditions.

In some embodiments, the method further includes: generating prompt information indicating that the deployment of the target autonomous driving model is terminated, if the driving control information generated by the test vehicle based on the target autonomous driving model does not meet the preset conditions.

In some embodiments, prior to deploying the target autonomous driving model to the target vehicle, all or part of the driving control information of the target vehicle is generated based on real-time processing results of the target environmental data by the initial autonomous driving model; the target autonomous driving model is obtained by training the initial autonomous driving model of the target vehicle based on the target environmental data and the adjusted tagged information, including obtaining a copy of the initial autonomous driving model; the target autonomous driving model is obtained by training the copy based on the driving control information of the target vehicle and the target environmental data; the target autonomous driving model is sent to the target vehicle, so that the target vehicle generates the driving control information based on the target autonomous driving model.

An embodiment of the present disclosure also provides a vehicle control apparatus, comprising a processor configured to perform the following steps:
acquiring first environmental data, including environmental data collected by the target vehicle during the operation of the initial autonomous driving model;
training a copy of the initial autonomous driving model based on the first environmental data to obtain a target autonomous driving model;
deploying the target autonomous driving model to the target vehicle; and upon completion of the deployment, automatically granting the target vehicle the autonomous driving authority associated with the target autonomous driving model that were previously not enabled.

An embodiment of the present disclosure also provides a vehicle control apparatus, which is applied to a target vehicle; the control apparatus includes a processor configured to perform the following steps:
selecting target environmental data from the environmental data collected by sensors of the target vehicle based on driving data generated during the driving of the target vehicle;
uploading the selected target environmental data to a server, so that the server trains a copy of the initial autonomous driving model deployed on the target vehicle based on the target environmental data to obtain a target autonomous driving model;
receiving the target autonomous driving model sent by the server, and generating driving control information based on the target autonomous driving model.

In some embodiments, the target environmental data meets at least one of the following conditions: the driving control information output by at least two processing units on the target vehicle in response to the target environmental data is inconsistent, wherein the types of driving control information output by the at least two processing units are the same; the data is acquired under specified scenario; the data includes specified traffic elements; the processing units on the target vehicle output erroneous driving control information in response to the target environmental data; the data is acquired when the autonomous driving state of the target vehicle is abnormal; the driving control information output by the processing units on the vehicle in response to the target environmental data is inconsistent with driving control information output by a driver; perception results output by the initial autonomous driving model in response to the target environmental data are inconsistent with actual results.

An embodiment of the present disclosure also provides a vehicle control apparatus which is applied to a server; the control apparatus comprises a processor configured to perform the following steps:
receiving target environmental data uploaded by the target vehicle, including data selected by the target vehicle from environmental data collected by sensors on the target vehicle based on driving data generated during the driving;
tagging traffic elements in the target environmental data based on a pre-trained recognition model to obtain tagged information;
displaying the target environmental data and the tagged information on a manual annotation interface, and adjusting tagged information based on operations performed by a annotation operator on the manual annotation interface;
training the initial autonomous driving model of the target vehicle based on the target environmental data and the adjusted tagged information to obtain a target autonomous driving model;

Deploying the target autonomous driving model to the target vehicle, so that the target vehicle generates driving control information based on the target autonomous driving model.

The functions performed by the processor in the above apparatus embodiment are described in detail in the preceding method embodiment and will not be repeated here.

Figure 12 illustrates a more specific schematic diagram of the hardware structure of the apparatus according to an embodiment of the present disclosure. The apparatus may include: a processor 1201, a memory 1202, an input/output interface 1203, a communication interface 1204, and a bus 1205, wherein the processor 1201, the memory 1202, the input/output interface 1203, and the communication interface 1204 are interconnected via the bus 1205 to facilitate internal communication within the apparatus.

The processor 1201 may be implemented using a general-purpose CPU (Central Processing Unit), a microprocessor, an Application-Specific Integrated Circuit (ASIC), or one or more integrated circuits, and is used to execute relevant programs to implement the technical solutions provided by the embodiments of this specification. The processor 1201 may also include a graphics card. The graphics card may be a NVIDIA Titan X graphics card or a 1080 Ti graphics card and the like.

The memory 1202 may be implemented using ROM (Read-Only Memory), RAM (Random Access Memory), static storage devices, dynamic storage devices and the like. The memory 1202 may store operating systems and other applications. When the technical solutions of the embodiments described herein are implemented via software or firmware, the relevant program codes are stored in the memory 1202 and executed by the processor 1201 upon invocation.

The input/output interface 1203 is used to connect input/output modules to achieve the input and output of information. The input/output modules may be configured as components within the apparatus (not shown in the figure) or may be external devices providing corresponding functions. Input devices may include keyboards, mice, touchscreens, microphones, various sensors, and the like, while output devices may include displays, speakers, vibrators, indicator lights, and the like.

The communication interface 1204 is used to connect communication modules (not shown in the figure) to enable communication and interaction between this apparatus and other apparatuses. Communication modules may achieve communication via wired methods (e.g., USB, Ethernet cables, etc.) or wireless methods (e.g., mobile networks, Wi-Fi, Bluetooth, etc.).

The bus 1205 includes pathways for transmitting information between various components of the e (such as the processor 1201, the memory 1202, the input/output interface 1203, and the communication interface 1204).

It should be noted that although the above apparatus is shown with only the processor 1201, the memory 1202, the input/output interface 1203, the communication interface 1204, and the bus 1205, the apparatus may in specific implementations also include other components necessary for normal operation. Furthermore, those skilled in the art will understand that the apparatus described above may also include only the components necessary to implement the embodiments described herein, without necessarily including all the components shown in the figure.

Referring to Figure 13, an embodiment of the present disclosure further provides a vehicle comprising:
a sensor 1301 for collecting environmental data;
a processor 1302 configured to: select target environmental data from the environmental data collected by sensor on the vehicle based on driving data generated during the driving of the vehicle; upload the selected target environmental data to a server, so that the server trains a copy of an initial autonomous driving model deployed on the vehicle based on the target environmental data to obtain a target autonomous driving model; and receive the target autonomous driving model sent by the server and generate driving control information based on the target autonomous driving model.

The vehicle of the embodiment of the present disclosure may be the target vehicle described in the preceding embodiments. The vehicle may be equipped with the sensor 1301, including but not limited to, various types of sensors such as visual sensors, millimeter-wave radar, LiDAR, ultrasonic sensors, and IMUs. Depending on actual requirements, one or more sensors 1301 may be installed on the vehicle. For example, a visual sensor may be installed on each of left and right rearview mirrors of the vehicle. Multiple different types of sensors 1301 may be installed on the same vehicle. Each sensor 1301 installed on the vehicle may collect environmental data, such as image data, audio data, and the like. The functions performed by the processor 1302 are described in detail in the aforementioned method embodiments and will not be repeated here.

The embodiments of the present disclosure automatically select target environmental data from the environmental data collected by sensors of the target vehicle based on driving data generated during the driving of the target vehicle, thereby enabling online data mining and selective uploading of target environmental data. On the one hand, this method of online mining and automatic uploading reduces the need for manual participation; on the other hand, it reduces the volume of target environmental data that the server must process, thereby improving the quality of sample data. This enhances the efficiency of the server in training the target autonomous driving model and improves the performance of the trained model with superior performance. Consequently, the reliability and accuracy of the driving control information generated by the target vehicle based on the target autonomous driving model, thereby improving the driving safety of the target vehicle.

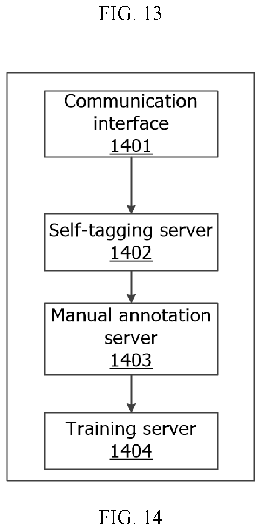

Referring to Figure 14, an embodiment of the present disclosure further provides a server comprising:
a communication interface 1401, configured to receive target environmental data uploaded by the target vehicle, the target environmental data including data selected by the target vehicle from environmental data collected by sensors on the target vehicle based on driving data generated during the driving;
a self-tagging server 1402, configured to label traffic elements in the target environmental data based on a pre-trained recognition model to obtain tagged information;
a manual annotation server 1403, comprising a display device capable of displaying a manual annotation interface, the manual annotation server being configured to display the target environmental data and tagged information on the manual annotation interface and to adjust the tagged information based on operations performed by an annotation operator on the manual annotation interface;
a training server 1404, configured to train an initial autonomous driving model of the target vehicle based on the target environmental data and the adjusted annotation information to obtain a target autonomous driving model;
the communication interface 1401 being further configured to deploy the target autonomous driving model to the target vehicle, so that the target vehicle generates driving control information based on the target autonomous driving model.

The functions performed by each server in the embodiments of this disclosure are described in detail in the aforementioned method embodiments and will not be repeated here. In particular, the communication interface 1401 may transmit data to and from the target vehicle via communication means such as 4G networks, Wi-Fi, or wired networks to achieve the uploading of the target environmental data and the deployment of the target autonomous driving model. Each server may be configured with corresponding entry/exit conditions to achieve the automatic triggering of relevant tasks.

Upon receiving the target environmental data, the communication interface 1401 may automatically store the data into the data server, and the self-tagging server 1402 may obtain the target environmental data from the data server in response to the meeting of preset conditions. The preset conditions may include: data volume of the target environmental data in the data server reaching a certain volume, time interval between current time and last time the target environmental data was obtained reaching a preset time interval, and receiving of triggering information and/or other conditions. Alternatively, the communication interface 1401 may also directly send the target environmental data to the self-tagging server 1402 upon receiving it.

After tagging is completed, the self-tagging server 1402 may automatically send the tagged target environmental data to the manual annotation server 1403. In this process, the data may be divided into minimum data units; for example, when the target environmental data consists of images, one or more images may be divided into minimum data units. Once the tagging process of the target environmental data of a minimum data unit is completed, the target environmental data of such minimum data unit and its tagged information may be packaged and sent to the manual annotation server 1403. The manual annotation server 1403 may display the received target environmental data and its tagged information on the manual annotation interface, so that an annotation operator adjusts the tagged information. The annotation results may undergo quality inspection; if they pass inspection, the manual annotation server 1403 may send the target environmental data and its adjusted annotation information to training server 1404.

The training server 1404 can pre-configure model hyperparameters, convergence criteria, loss functions, and other information. Upon receiving data from the manual annotation server 1403, it automatically initiates the model training. If the convergence conditions are met, the training server 1404 may deploy the trained autonomous driving model to the target vehicle via the communication interface 1401.

The above embodiment implements an automated processing workflow for each stage during the model deployment. The processing performed by each server forms an automated pipeline, reducing manual participation, improving model deployment efficiency, and saving labor costs.

An embodiment of the present invention also provides a computer-readable storage medium storing several computer instructions, which, when executed, implement the steps of any embodiment method..

The technical features in the above embodiments may be combined in any manner, provided that there is no conflict or contradiction between the combinations of features. Due to space limitations, not all combinations have been described individually. Therefore, any combination of the technical features in the above embodiments also falls within the scope of the disclosure of this specification.

The embodiments of this specification may take the form of a computer program product implemented on one or more storage media containing program code (including, but not limited to, disk storage, CD-ROMs, optical storage, etc.). Computer-readable storage media include permanent and non-permanent, removable and non-removable media, and may be implemented by any method or technology for storing information. The information may be computer-readable instructions, data structures, program modules, or other data. Examples of computer storage media include, but are not limited to: a phase-change memory (PRAM), a static random-access memory (SRAM), a dynamic random-access memory (DRAM), other types of random-access memory (RAM), a read-only memory (ROM), an electrically erasable programmable read-only memory (EEPROM), a flash memory or other memory technologies, a read-only compact disc read-only memory (CD-ROM), Digital Versatile Discs (DVDs) or other optical storage, magnetic tape cartridges, magnetic tape, magnetic disk storage, or other magnetic storage devices, or any other non-transmissive media capable of storing information accessible by a computing device.

The embodiments described in this disclosure are presented in a progressive manner; and the same and similar parts between various embodiments may be referred to each other. Each embodiment highlights the differences from the others. In particular, for apparatus embodiments, since they are fundamentally similar to the method embodiments, they are described briefly; the relevant content may refer to, the method embodiment sections for further details. The apparatus embodiments described above are merely illustrative; modules described as separate components may or may not be physically separate. When implementing the embodiments of this specification, the functions of each module may be implemented in one or more software and/or hardware components. Depending on practical needs, part or all of the modules may be selected to achieve the objectives of the embodiments. Those skilled in the art may understand and implement them without requiring an inventive step.

Those skilled in the art will readily conceive of other embodiments of the present disclosure after considering the description and instructions for practicing the present disclosure. The present disclosure is intended to cover any variations, uses, or adaptations thereof that follow the general principles of the present disclosure and incorporate common knowledge or conventional techniques in the art not disclosed herein. The description and examples are merely illustrative, and the true scope and spirit of the present disclosure are defined by the appended claims.

It should be understood that the present disclosure is not limited to the precise structures described and illustrated in the drawings, and various modifications and changes may be made without departing from its scope. The scope of the present disclosure is limited only by the appended claims.

The foregoing are merely preferred embodiments of the present disclosure and are not intended to limit the scope of the present disclosure. Any modifications, equivalent substitutions, improvements, and the like made within the spirit and principles of the present disclosure should be included within the scope of protection of the present disclosure.

## Claims

1. A vehicle control method, **characterized in that** the method comprises:
acquiring first environmental data, comprising environmental data collected by a target vehicle during the running of an initial autonomous driving model;
training a copy of the initial autonomous driving model based on the first environmental data to obtain a target autonomous driving model; and
deploying the target autonomous driving model to the target vehicle; upon completion of the deployment, ungranted autonomous driving authority associated with the target autonomous driving model being automatically granted to the target vehicle.

2. The method according to claim 1, **characterized in that**: the first environmental data is collected by sensors on the target vehicle; prior to deploying the target autonomous driving model to the target vehicle, all or part of driving control information of the target vehicle is generated based on real-time processing results of the first environmental data by the initial autonomous driving model; the target autonomous driving model is obtained by training the copy of the initial autonomous driving model based on the first environmental data and the driving control information.

3. The method according to claim 2, **characterized in that**, after deploying the target autonomous driving model to the target vehicle, all or part of the driving control information of the target vehicle is generated based on real-time processing results of second environmental data by the target autonomous driving model, the second environmental data comprising environmental data collected by the target vehicle during the operation of the target autonomous driving model;
wherein the driving control information generated based on the real-time processing results of the first environmental data by the initial autonomous driving model comprises a first type of information; the driving control information generated based on the real-time processing results of the second environmental data by the target autonomous driving model comprises a second type of information; and the second type comprises types other than the first type.

4. The method according to claim 1, **characterized in that** the first environmental data is collected by sensors on each of a plurality of data-collecting vehicles, at least two of the plurality of data-collecting vehicles located in different autonomous driving environments.

5. The method according to claim 1, **characterized in that** the target autonomous driving model is obtained based on the following:
tagging traffic elements in the first environmental data based on a pre-trained recognition model in a server to obtain tagged information;
displaying the first environmental data and the tagged information on a manual annotation interface, and adjusting the tagged information based on operations performed by an annotation operator on the manual interface; and
training the initial autonomous driving model of the target vehicle based on the first environmental data and the adjusted tagged information to obtain the target autonomous driving model.

6. The method according to claim 5, **characterized in that** deploying the target autonomous driving model to the target vehicle comprises:
sending the target autonomous driving model to a test vehicle;
acquiring, during the driving of the test vehicle, driving control information generated by the test vehicle based on the target autonomous driving model;
deploying the target autonomous driving model to the target vehicle, if the driving control information generated by the test vehicle based on the target autonomous driving model meets predetermined conditions.

7. The method according to claim 1, **characterized in that** the target autonomous driving model is obtained by training the copy of the initial autonomous driving model based on the first environmental data and the tagged information of the first environmental data;
the tagged information of the first environmental data is obtained through automatic tagging, or is obtained through automatic tagging followed by adjustments through manual annotation.

8. The method according to claim 7, **characterized in that** the tagged information of the first environmental data meeting at least one of the following conditions is obtained through automatic tagging followed by adjustments through manual annotation:
the tagged information of the first environmental data obtained through automatic tagging comprises tagged information corresponding to specified scenes;
the tagged information of the first environmental data obtained through automatic tagging comprises tagged information corresponding to specified traffic elements;
the target vehicle outputs erroneous driving control information in response to the first environmental data; and
the first environmental data is collected when the autonomous driving state of the target vehicle is abnormal.

9. The method according to claim 7, **characterized in that** the first environmental data is automatically tagged based on at least one of the following types of information:
driving control information of the target vehicle in response to the first environmental data;
degree of similarity between the first environmental data and template environmental data.

10. The method according to claim 1, **characterized in that** the target autonomous driving model is obtained by training the copy of the initial autonomous driving model based on the first environmental data and at least some of the following information:
tagged information of the first environmental data;
driving control information of the target vehicle in response to the first environmental data; and
driving mode at the time the first environmental data is collected.

11. The method according to claim 1, **characterized in that** the first environmental data is screened from the initial environmental data collected by the sensors on the target vehicle.

12. The method according to claim 11, **characterized in that** the initial environmental data is determined to be the first environmental data if it meets at least one of the following conditions:
the driving control information output by at least two processing units on the target vehicle in response to the initial environmental data is inconsistent, wherein the types of driving control information output by the at least two processing units are the same;
the initial environmental data is collected under specified scenario;
the initial environmental data comprises specified traffic elements;
the processing units on the target vehicle output erroneous driving control information in response to the initial environmental data;
the initial environmental data is collected when the autonomous driving state of the target vehicle is abnormal;
the driving control information output by the processing units on the target vehicle in response to the initial environmental data is inconsistent with driving control information output by a driver;
perception results output by the initial autonomous driving model in response to the initial environmental data are inconsistent with actual results.

13. The method according to claim 1, **characterized in that** the first environmental data is stored at a preset storage frequency, the storage frequency being positively correlated with a moving speed of the target vehicle.

14. The method according to claim 1, **characterized in that** the first environmental data is uploaded to a server when predetermined conditions are met, so that the server trains the copy of the initial autonomous driving model based on the first environmental data, the predetermined conditions being set based on at least one of the following types of information:
volume of the collected first environmental data; network bandwidth between the target vehicle and the server; time interval between current time and last time the first environmental data was uploaded; triggering information for triggering the uploading of the first environmental data; and degree of coverage completion of collection scenario of the first environmental data.

15. A vehicle control method, **characterized in that** it is applied to a target vehicle, the method comprising:
selecting target environmental data from the environmental data collected by sensors on the target vehicle based on driving data generated during the driving of the target vehicle;
uploading the selected target environmental data to a server, so that the server trains a copy of the initial autonomous driving model deployed on the target vehicle based on the target environmental data to obtain a target autonomous driving model; and
receiving the target autonomous driving model sent by the server, and generating driving control information based on the target autonomous driving model.

16. The method according to claim 15, **characterized in that** the target environmental data meets at least one of the following conditions:
driving control information output by at least two processing units on the target vehicle in response to the target environmental data is inconsistent, wherein the types of driving control information output by the at least two processing units are the same;
the data is collected under specified scenes;
the data comprises specified traffic elements;
the processing units on the target vehicle output erroneous driving control information in response to the target environmental data;
the data is collected when the autonomous driving state of the target vehicle is abnormal;
driving control information output by the processing units on the vehicle in response to the target environmental data is inconsistent with driving control information output by a driver;
perception results output by the initial autonomous driving model in response to the target environmental data are inconsistent with actual results.

17. A vehicle control method, **characterized in that** it is applied to a server, the method comprising:
receiving target environmental data uploaded by a target vehicle, comprising data selected by the target vehicle from environmental data collected by sensors on the target vehicle based on driving data generated during the driving;
tagging traffic elements in the target environmental data based on a pre-trained recognition model to obtain tagged information;
displaying the target environmental data and the tagged information on a manual annotation interface, and adjusting the tagged information based on operations performed by an annotation operator on the manual tagging interface;
training an initial autonomous driving model of the target vehicle based on the target environmental data and the adjusted tagged information to obtain a target autonomous driving model; and
deploying the target autonomous driving model to the target vehicle, so that the target vehicle generates driving control information based on the target autonomous driving model.

18. The method according to claim 17, **characterized in that** deploying the target autonomous driving model to the target vehicle comprises:
sending the target autonomous driving model to a test vehicle;
acquiring, during the driving of the test vehicle, driving control information generated by the test vehicle based on the target autonomous driving model; and
deploying the target autonomous driving model to the target vehicle, if the driving control information generated by the test vehicle based on the target autonomous driving model meets predetermined conditions.

19. The method according to claim 18, **characterized in that** it further comprises:
generating prompt information for indicating the termination of the deployment of the target autonomous driving model, if the driving control information generated by the test vehicle based on the target autonomous driving model does not meet the preset conditions.

20. The method according to claim 17, **characterized in that**, prior to deploying the target autonomous driving model to the target vehicle, all or part of the driving control information of the target vehicle is generated based on real-time processing results of the target environmental data by the initial autonomous driving model;
training an initial autonomous driving model of the target vehicle based on the target environmental data and the adjusted tagged information to obtain a target autonomous driving model comprises:
acquiring a copy of the initial autonomous driving model;
training the copy based on the driving control information of the target vehicle and the target environmental data to obtain the target autonomous driving model; and
sending the target autonomous driving model to the target vehicle, so that the target vehicle generates driving control information based on the target autonomous driving model.

21. A vehicle control apparatus, **characterized in that** the apparatus comprises a processor configured to perform the following steps:
acquiring first environmental data comprising environmental data collected by a target vehicle during the operation of an initial autonomous driving model;
training a copy of the initial autonomous driving model based on the first environmental data to obtain a target autonomous driving model; and
deploying the target autonomous driving model to the target vehicle; upon completion of the deployment, ungranted autonomous driving authority associated with the target autonomous driving model being automatically granted to the target vehicle.

22. The apparatus according to claim 21, **characterized in that**: the first environmental data is collected by sensors on the target vehicle; prior to deploying the target autonomous driving model to the target vehicle, all or part of driving control information of the target vehicle is generated based on real-time processing results of the first environmental data by the initial autonomous driving model; the target autonomous driving model is obtained by training the copy of the initial autonomous driving model based on the first environmental data and the driving control information.

23. The apparatus according to claim 22, **characterized in that**, after deploying the target autonomous driving model to the target vehicle, all or part of the driving control information of the target vehicle is generated based on real-time processing results of second environmental data by the target autonomous driving model, the second environmental data comprising environmental data collected by the target vehicle during the operation of the target autonomous driving model;
wherein the driving control information generated based on the real-time processing results of the first environmental data by the initial autonomous driving model comprises a first type of information; the driving control information generated based on the real-time processing results of the second environmental data by the target autonomous driving model comprises a second type of information; and the second type comprises types other than the first type.

24. The apparatus according to claim 21, **characterized in that** the first environmental data is collected by sensors on each of a plurality of data-collecting vehicles, at least two of the plurality of data-collecting vehicles located in different autonomous driving environments.

25. The apparatus according to claim 21, **characterized in that** the processor obtains the target autonomous driving model based on the following:
tagging traffic elements in the first environmental data based on a pre-trained recognition model in a server to obtain tagged information;
displaying the first environmental data and the tagged information on a manual annotation interface, and adjusting the tagged information based on operations performed by an annotation operator on the manual annotation interface;
training the initial autonomous driving model of the target vehicle based on the first environmental data and the adjusted tagged information to obtain the target autonomous driving model.

26. The apparatus according to claim 25, **characterized in that** the processor is specifically configured to:
send the target autonomous driving model to a test vehicle;
acquiring, during the driving of the test vehicle, driving control information generated by the test vehicle based on the target autonomous driving model;
deploying the target autonomous driving model to the target vehicle, if the driving control information generated by the test vehicle based on the target autonomous driving model meets predetermined conditions.

27. The apparatus according to claim 21, **characterized in that** the target autonomous driving model is obtained by training a copy of the initial autonomous driving model based on the first environmental data and the tagged information of the first environmental data;
the tagged information of the first environmental data is obtained through automatic tagging, or is obtained through automatic tagging followed by adjustments through manual annotation.

28. The apparatus according to claim 27, **characterized in that** the tagged information of the first environmental data meeting at least one of the following conditions is obtained through automatic tagging followed by adjustments through manual annotation:
the tagged information of the first environmental data obtained through automatic tagging comprises tagged information corresponding to specified scenarios;
the tagged information of the first environmental data obtained through automatic tagging comprises tagged information corresponding to specified traffic elements;
the target vehicle outputs erroneous driving control information in response to the first environmental data;
the first environmental data is collected when the autonomous driving state of the target vehicle is abnormal.

29. The apparatus according to claim 27, **characterized in that** the first environmental data is automatically tagged based on at least one of the following types of information:
driving control information of the target vehicle in response to the first environmental data;
degree of similarity between the first environmental data and template environmental data.

30. The apparatus according to claim 21, **characterized in that** the target autonomous driving model is obtained by training a copy of the initial autonomous driving model based on the first environmental data and at least some of the following information:
tagged information of the first environmental data;
driving control information of the target vehicle in response to the first environmental data;
driving mode at the time the first environmental data is collected.

31. The apparatus according to claim 21, **characterized in that** the first environmental data is screened from the initial environmental data collected by the sensors on the target vehicle.

32. The apparatus according to claim 31, **characterized in that** the initial environmental data is determined to be the first environmental data if it meets at least one of the following conditions:
the driving control information output by at least two processing units on the target vehicle in response to the initial environmental data is inconsistent, wherein the types of driving control information output by the at least two processing units are the same;
the initial environmental data is collected under specified scenario;
the initial environmental data comprises specified traffic elements;
the processing units on the target vehicle output erroneous driving control information in response to the initial environmental data;
the initial environmental data is collected when the autonomous driving state of the target vehicle is abnormal;
the driving control information output by the processing units on the target vehicle in response to the initial environmental data is inconsistent with driving control information output by a driver;
perception results output by the initial autonomous driving model in response to the initial environmental data are inconsistent with actual results.

33. The apparatus according to claim 21, **characterized in that** the first environmental data is stored at a preset storage frequency, the storage frequency being positively correlated with a travel speed of the target vehicle.

34. The apparatus according to claim 21, **characterized in that** the first environmental data is uploaded to a server when predetermined conditions are met, so that the server trains a copy of the initial autonomous driving model based on the first environmental data, the predetermined conditions being set based on at least one of the following types of information:
volume of the collected first environmental data; network bandwidth between the apparatus and the server; time interval between current time and last time the first environmental data was uploaded; triggering information for triggering the uploading of the first environmental data; and degree of coverage completion of collection scenario of the first environmental data.

35. A vehicle control apparatus, **characterized in that** it is applied to a target vehicle; the apparatus comprises a processor configured to perform the following steps:
selecting target environmental data from environmental data collected by sensors on the target vehicle based on driving data generated during the driving of the target vehicle;
uploading the selected target environmental data to a server, so that the server trains a copy of the initial autonomous driving model deployed on the target vehicle based on the target environmental data to obtain a target autonomous driving model; and
receiving the target autonomous driving model sent by the server, and generating driving control information based on the target autonomous driving model.

36. The apparatus according to claim 35, **characterized in that** the target environmental data meets at least one of the following conditions:
the driving control information output by at least two processing units on the target vehicle in response to the target environmental data is inconsistent, wherein the types of driving control information output by the at least two processing units are the same;
the data is collected under specified scenario;
the data comprises specified traffic elements;
the processing units on the target vehicle output erroneous driving control information in response to the target environmental data;
the data is collected when the autonomous driving state of the target vehicle is abnormal;
the driving control information output by the processing units on the vehicle in response to the target environmental data is inconsistent with driving control information output by a driver; and
perception results output by the initial autonomous driving model based on the target environmental data are inconsistent with actual results.

37. A vehicle control apparatus, **characterized in that** it is applied to a server, the apparatus comprising a processor configured to perform the following steps:
receiving target environmental data uploaded by a target vehicle, comprising data selected by the target vehicle from environmental data collected by sensors on the target vehicle based on driving data generated during the driving;
tagging traffic elements in the target environmental data based on a pre-trained recognition model to obtain tagged information;
displaying the target environmental data and the tagged information on a manual annotation interface, and adjusting the tagged information based on operations performed by an annotation operator on the manual annotation interface;
training an initial autonomous driving model of the target vehicle based on the target environmental data and the adjusted tagged information to obtain a target autonomous driving model; and
deploying the target autonomous driving model to the target vehicle, so that the target vehicle generates driving control information based on the target autonomous driving model.

38. The apparatus according to claim 37, **characterized in that** the processor is specifically configured to:
send the target autonomous driving model to a test vehicle;
acquire during the driving of the test vehicle driving control information generated by the test vehicle based on the target autonomous driving model;
deploy the target autonomous driving model to the target vehicle, if the driving control information generated by the test vehicle based on the target autonomous driving model meets predetermined conditions.

39. The apparatus according to claim 38, **characterized in that** the processor is further configured to:
generate prompt information for indicating the termination of the deployment of the target autonomous driving model, if the driving control information generated by the test vehicle based on the target autonomous driving model does not meet predetermined conditions.

40. The apparatus according to claim 37, **characterized in that**, prior to deploying the target autonomous driving model to the target vehicle, all or part of the driving control information of the target vehicle is generated based on real-time processing results of the target environmental data by the initial autonomous driving model;
the processor is specifically configured to:
acquire a copy of the initial autonomous driving model;
train the copy based on the driving control information of the target vehicle and the target environmental data to obtain the target autonomous driving model;
send the target autonomous driving model to the target vehicle, so that the target vehicle generates driving control information based on the target autonomous driving model.

41. A computer-readable storage medium, **characterized in that** it stores computer instructions which, when executed by a processor, implement the method according to any one of claims 1 to 20.

42. A vehicle, **characterized in that** the vehicle comprises:
a sensor for collecting environmental data;
a processor configured to: select target environmental data from environmental data collected by sensors on the vehicle based on driving data generated during the driving of the vehicle; upload the selected target environmental data to a server, so that the server trains a copy of an initial autonomous driving model deployed on the vehicle based on the target environmental data to obtain a target autonomous driving model; and receive the target autonomous driving model sent by the server and generate driving control information based on the target autonomous driving model.

43. A server, **characterized in that** the server comprises:
a communication interface, configured to receive target environmental data uploaded by a target vehicle, comprising data selected by the target vehicle from environmental data collected by sensors on the target vehicle based on driving data generated during the driving;
a self-tagging server, configured to label traffic elements in the target environmental data based on a pre-trained recognition model to obtain tagged information;
a manual annotation server, comprising a display apparatus capable of displaying a manual annotation interface, the manual annotation server being configured to display the target environmental data and the tagged information on the manual annotation interface, and to adjust the tagged information based on operations performed by an annotation operator on the manual annotation interface;
a training server, configured to train an initial autonomous driving model of the target vehicle based on the target environmental data and the adjusted tagged information to obtain a target autonomous driving model; and
the communication interface being further configured to deploy the target autonomous driving model to the target vehicle, so that the target vehicle generates driving control information based on the target autonomous driving model.
